# EUROPÄISCHE PATENTSCHRIFT

(11) **EP 3 930 443 B1**
(45) Veröffentlichungstag und Bekanntmachung des Hinweises auf die Patenterteilung: **23.10.2024**
(21) Anmeldenummer: 20707621.7
(22) Anmeldetag: 27.02.2020
(51) Int. Cl.: A01D 34/00, A01D 34/68, A01D 34/78

(54) **ANGETRIEBENE BODENPFLEGEVORRICHTUNG**
POWERED FLOOR CARE DEVICE
DISPOSITIF D'ENTRETIEN ALIMENTÉ POUR SOL

(30) Priorität: 28.02.2019 DE 102019202700; 03.09.2019 DE 102019213294
(43) Veröffentlichungstag der Anmeldung: 05.01.2022
(73) Patentinhaber: Robert Bosch GmbH, 70442 Stuttgart (DE)
(72) Erfinder: LING, Matthew, Suffolk IP14 5BB (GB); ADEKUNLE, Abiodun, Suffolk IP2 8JH (GB)
(86) Internationale Anmeldenummer: PCT/EP2020/055146
(87) Internationale Veröffentlichungsnummer: WO 2020/174046

(56) Entgegenhaltungen:
- EP-A1- 2 111 735
- EP-A1- 2 420 130
- EP-A1- 3 326 443
- EP-A1- 3 326 444
- US-A1- 2012 227 368
- US-A1- 2013 104 509
- US-A1- 2018 192 580

## Beschreibung

### Stand der Technik

Es ist bereits eine angetriebene Bodenpflegevorrichtung, insbesondere ein akkubetriebener Rasenmäher, mit zumindest einer elektrischen Vortriebsantriebseinheit, mit zumindest einer elektrischen Bearbeitungsantriebseinheit, mit zumindest einer Steuer- und/oder Regeleinheit, die dazu eingerichtet ist, die elektrische Vortriebsantriebseinheit zu einer Regelung einer Fortbewegungsgeschwindigkeit anzusteuern, und mit zumindest einer Erfassungseinheit, die zu einer Erfassung von zumindest einem Fortbewegungsparameter und/oder von zumindest einem Bearbeitungsparameter, insbesondere von zumindest einem Lastparameter der Vortriebsantriebseinheit und/oder der Bearbeitungsantriebseinheit, eingerichtet ist, vorgeschlagen worden.

EP 3 326 443 A1 offenbart beispielsweise eine Elektrowerkzeugvorrichtung, insbesondere einen handgeschobenen Rasenmäher, mit einer Vortriebsantriebseinheit, einen Bearbeitungsmotor und eine Recheneinheit zu einer Steuerung der Vortriebsantriebseinheit in Abhängigkeit von einem Lastparameter des Bearbeitungsmotors. Die Elektrowerkzeugvorrichtung umfasst zudem Sensoren zu einer Erfassung einer Rotationsgeschwindigkeit bzw. eines Drehmoments der Elektrowerkzeugvorrichtung und des Bearbeitungsmotors. EP 3 326 443 A1 offenbart allerdings lediglich ein lineares Beschleunigungsverhalten für die Steuerung der Vortriebsantriebseinheit.

Eine objektive technische Aufgabe könnte somit sein, eine Bodenpflegevorrichtung bzw. ein Verfahren zur Verfügung zu stellen, welche(s) vorteilhaft verbesserte Eigenschaften hinsichtlich einer(s) individuell gesteuerten gleichzeitig schnelten und sanften Beschleunigung und Abbremsverhaltens aufweist.

Ferner wird auf die Druckschriften EP 3 326 444 A1, US 2018/192580 A1, US 2013/104509 A1, US 2012/227368 A1, EP2 420 130 A1 und EP 2 111 735 A1 verwiesen.

### Offenbarung der Erfindung

Die Erfindung geht aus von einer angetriebenen Bodenpflegevorrichtung mit den Merkmalen des Anspruchs 1 bzw. von einem Verfahren mit den Merkmalen des Anspruchs 7. Vorteilhafte Weiterbildungen ergeben sich aus den abhängigen Ansprüchen.

Somit sind den Beschleunigungsdaten eine Mehrzahl von hystereseartigen Beschleunigungs- und/oder Bremskennlinien der elektrischen Vortriebsantriebseinheit vorgeben, wobei jede der hystereseartigen Beschleunigungs- und/oder Bremskennlinien einem anderen Fortbewegungsparameter zugeordnet ist. Dadurch kann vorteilhaft in Abhängigkeit von einem erfassten Fortbewegungsparameter jeweils eine hystereseartige Beschleunigungs- und/oder Bremskennlinie ausgewählt werden. Vorteilhaft kann eine schnelle Reaktion auf starke Änderungen der Bearbeitungsgeschwindigkeit bei einem gleichzeitig ruhigen Betrieb der angetriebenen Bodenpflegevorrichtung ermöglicht werden, insbesondere situationsbedingt in Abhängigkeit des Fortbewegungsparameters. Vorteilhaft können gleichmäßige Beschleunigungen und Bremsungen für die Übergänge zwischen Fortbewegungsparametern, insbesondere Fortbewegungsgeschwindigkeiten, und ein sanfter Beschleunigungsbetrieb der angetriebenen Bodenpflegevorrichtung ermöglicht werden. Durch die Mehrzahl an zuordenbaren Beschleunigungs- und/oder Bremskennlinien kann eine vorteilhaft geringe benötigte Rechenleistung für eine von dem Bearbeitungsparameter abhängige Steuerung der Vortriebsantriebseinheit ermöglicht werden.

Vorzugsweise ist die Erfassungseinheit dazu eingerichtet, zumindest einen Fortbewegungsparameter, insbesondere die Fortbewegungsgeschwindigkeit, und/oder zumindest einen Bearbeitungsparameter, insbesondere die Bearbeitungsgeschwindigkeit, zu erfassen. Bevorzugt ist die Steuer- und/oder Regeleinheit dazu eingerichtet, die elektrische Vortriebsantriebseinheit zu einer stufenweisen Regelung der Fortbewegungsgeschwindigkeit in Abhängigkeit von zumindest einem von der Erfassungseinheit erfassten Fortbewegungsparameter, insbesondere von einer von der Erfassungseinheit erfassten Fortbewegungsgeschwindigkeit, und in Abhängigkeit von zumindest einem von der Erfassungseinheit erfassten Bearbeitungsparameter, insbesondere in Abhängigkeit von einer von der Erfassungseinheit erfassten Bearbeitungsgeschwindigkeit, insbesondere in Abhängigkeit von einem Mittelwert einer Mehrzahl von Messungen des zumindest einen Bearbeitungsparameters, insbesondere einer Mehrzahl von Messungen der Bearbeitungsgeschwindigkeit, anzusteuern und/oder dazu eingerichtet, die elektrische Bearbeitungsantriebseinheit zu einer stufenweisen Regelung der Bearbeitungsgeschwindigkeit in Abhängigkeit von zumindest einem von der Erfassungseinheit erfassten Fortbewegungsparameter, insbesondere in Abhängigkeit von einer von der Erfassungseinheit erfassten Fortbewegungsgeschwindigkeit, insbesondere in Abhängigkeit von einem Mittelwert einer Mehrzahl von Messungen des zumindest einen Fortbewegungsparameters, insbesondere einer Mehrzahl von Messungen der Fortbewegungsgeschwindigkeit, und in Abhängigkeit von zumindest einem von der Erfassungseinheit erfassten Bearbeitungsparameter, insbesondere in Abhängigkeit von einem von der Erfassungseinheit erfassten Lastparameter der elektrischen Bearbeitungsantriebseinheit, anzusteuern.

Die angetriebene Bodenpflegevorrichtung ist vorzugsweise zu einer Pflege, insbesondere zu einer Bearbeitung, eines Bodens vorgesehen. Unter einer "angetriebenen Bodenpflegevorrichtung" soll insbesondere eine Bodenpflegevorrichtung verstanden werden, die zumindest einen Antrieb zu einer Fortbewegung über einen Boden, beispielsweise einen Rasen, einen Fußboden, einen Gehweg o. dgl., oder zumindest zu einer Unterstützung einer Fortbewegung über einen Boden umfasst. Die angetriebene Bodenpflegevorrichtung weist bevorzugt die elektrische Vortriebsantriebseinheit auf, die dazu vorgesehen ist, zumindest eine Fortbewegungseinheit der angetriebenen Bodenpflegevorrichtung zu einer Fortbewegung über einen Boden oder zumindest zu einer Unterstützung einer Fortbewegung über einen Boden anzutreiben. Die angetriebene Bodenpflegevorrichtung kann insbesondere als ein handgeführter Rasenmäher, als ein autonomer Rasenmäher, als ein Aufsitzrasenmäher, als ein handgeführter Staubsauger, als ein autonomer Staubsauger, als eine Putzmaschine, insbesondere als ein Putzroboter oder als eine Aufsitzputzmaschine, oder als eine andere, einem Fachmann als sinnvoll erscheinende angetriebene Bodenpflegevorrichtung ausgebildet sein. Insbesondere ist die angetriebene Bodenpflegevorrichtung dazu vorgesehen, einen als einen Rasen ausgebildeten Boden zu mähen, einen als einen Fußboden ausgebildeten Boden zu saugen und/oder zu putzen o. dgl. Bevorzugt ist die angetriebene Bodenpflegevorrichtung als eine mit elektrischer Energie betreibbare angetriebene Bodenpflegevorrichtung, insbesondere als eine akkubetriebene angetriebene Bodenpflegevorrichtung ausgebildet. Unter "vorgesehen" soll insbesondere speziell ausgestattet und/oder speziell eingerichtet verstanden werden. Unter "eingerichtet" soll insbesondere speziell programmiert und/oder speziell ausgelegt verstanden werden. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt.

Die Fortbewegungseinheit ist vorzugsweise zu einem Vortrieb über einen Boden vorgesehen. Insbesondere umfasst die Fortbewegungseinheit zumindest ein Fortbewegungselement, bevorzugt zumindest zwei Fortbewegungselemente. Das zumindest eine Fortbewegungselement ist vorzugsweise als ein Antriebsrad ausgebildet, das insbesondere um eine Radachse der Fortbewegungseinheit rotatorisch antreibbar ist. Alternativ ist denkbar, dass das Fortbewegungselement als ein Roboterbein, als eine Vortriebskette oder als ein anderes, einem Fachmann als sinnvoll erscheinendes Fortbewegungselement ausgebildet ist. Die elektrische Vortriebsantriebseinheit ist vorzugsweise zu einem Antrieb der Fortbewegungseinheit, insbesondere des zumindest einen Fortbewegungselements vorgesehen. Insbesondere umfasst die elektrische Vortriebsantriebseinheit zumindest einen Elektromotor zu einem Antrieb der Fortbewegungseinheit. Bevorzugt umfasst die elektrische Vortriebsantriebseinheit eine Anzahl von Elektromotoren entsprechend einer Anzahl von anzutreibenden Fortbewegungselementen, wobei insbesondere jeweils ein Elektromotor zu einem Antrieb jeweils eines Fortbewegungselements vorgesehen ist.

Vorzugsweise umfasst die angetriebene Bodenpflegevorrichtung zumindest eine Bearbeitungseinheit, die zu einer Pflege, insbesondere zu einer Bearbeitung, eines Bodens vorgesehen ist. Die Bearbeitungseinheit kann insbesondere als ein Mähwerk, als eine Staubsaugerbürste, als eine Putzbürste, insbesondere als eine Polierbürste, oder als eine andere, einem Fachmann als sinnvoll erscheinende Bearbeitungseinheit ausgebildet sein. Vorzugsweise ist die elektrische Bearbeitungsantriebseinheit zu einem Antrieb der Bearbeitungseinheit vorgesehen. Insbesondere umfasst die elektrische Bearbeitungsantriebseinheit zumindest einen Elektromotor zu einem Antrieb der Bearbeitungseinheit.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuer- und/oder Regeleinheit ist vorzugsweise zu einer Steuerung und/oder Regelung der elektrischen Vortriebsantriebseinheit und/oder der elektrischen Bearbeitungsantriebseinheit, insbesondere zu einer Regelung einer der elektrischen Vortriebsantriebseinheit und/oder der elektrischen Bearbeitungsantriebseinheit zugeführten elektrischen Energie, eingerichtet. Insbesondere kann die Steuer- und/oder Regeleinheit zu einer Steuerung und/oder Regelung von weiteren Funktionen und/oder Parametern der angetriebenen Bodenpflegevorrichtung, beispielhaft zu einer Steuerung einer Navigation der angetriebenen Bodenpflegevorrichtung in einem Arbeitsbereich, eingerichtet sein. Vorzugsweise ist die Steuer- und/oder Regeleinheit dazu eingerichtet, über eine Ansteuerung der elektrischen Vortriebsantriebseinheit eine Fortbewegungsgeschwindigkeit der angetriebenen Bodenpflegevorrichtung zu regeln. Vorzugsweise ist die Steuer- und/oder Regeleinheit dazu eingerichtet, über eine Ansteuerung der elektrischen Bearbeitungsantriebseinheit eine Bearbeitungsgeschwindigkeit der angetriebenen Bodenpflegevorrichtung, beispielsweise eine Drehzahl von Schneidmessern einer als ein Mähwerk ausgebildeten Bearbeitungseinheit, zu regeln.

Ein Lastparameter der elektrischen Vortriebsantriebseinheit bzw. ein Lastparameter der elektrischen Bearbeitungsantriebseinheit ist insbesondere ein Parameter, der eine Last der elektrischen Vortriebsantriebseinheit bzw. der elektrischen Bearbeitungsantriebseinheit beschreibt. Unter einer "Last" einer Antriebseinheit, insbesondere eines Motors der Antriebseinheit, soll insbesondere eine von der Antriebseinheit, insbesondere von dem Motor, erbrachte, insbesondere elektrische, mechanische und/oder thermische, Leistung, eine von der Antriebseinheit, insbesondere von dem Motor, verrichtete, insbesondere elektrische, mechanische und/oder thermische, Arbeit, ein von der Antriebseinheit, insbesondere von dem Motor, aufgebrachtes Drehmoment und/oder eine auf die Antriebseinheit, insbesondere auf den Motor, wirkende, insbesondere elektrische, mechanische und/oder thermische, Belastung verstanden werden. Vorzugsweise ist der Lastparameter der elektrischen Vortriebsantriebseinheit und/oder der elektrischen Bearbeitungsantriebseinheit, insbesondere zumindest eines Elektromotors der elektrischen Vortriebsantriebseinheit und/oder der elektrischen Bearbeitungsantriebseinheit, als ein Motorstrom und/oder als eine Motorspannung ausgebildet. Alternativ ist vorstellbar, dass der Lastparameter der elektrischen Vortriebsantriebseinheit und/oder der elektrischen Bearbeitungsantriebseinheit als eine Abwärme, als eine Drehzahl oder als ein anderer, einem Fachmann als sinnvoll erscheinender Lastparameter ausgebildet ist.

Der zumindest eine Fortbewegungsparameter der angetriebenen Bodenpflegevorrichtung ist vorzugsweise als eine Fortbewegungsgeschwindigkeit der angetriebenen Bodenpflegevorrichtung, insbesondere als eine absolute Fortbewegungsgeschwindigkeit und/oder als eine Fortbewegungsgeschwindigkeit entsprechend einer Drehzahl des zumindest einen, insbesondere durchdrehungsfreien und blockierfreien, Fortbewegungselements, als ein Lastparameter der elektrischen Vortriebsantriebseinheit, als eine Drehzahl der elektrischen Vortriebsantriebseinheit, als eine Fortbewegungsbeschleunigung der angetriebenen Bodenpflegevorrichtung oder als ein anderer, einem Fachmann als sinnvoll erscheinender Fortbewegungsparameter ausgebildet. Der zumindest eine Bearbeitungsparameter der angetriebenen Bodenpflegevorrichtung ist vorzugsweise als eine Bearbeitungsgeschwindigkeit der angetriebenen Bodenpflegevorrichtung, insbesondere als eine Bearbeitungsgeschwindigkeit entsprechend einer Drehzahl der Bearbeitungseinheit und/oder als eine Rotationsgeschwindigkeit von zumindest einem Bearbeitungswerkzeug, insbesondere von zumindest einem Schneidmesser, der Bearbeitungseinheit, als ein Lastparameter der elektrischen Bearbeitungsantriebseinheit, als eine Drehzahl der elektrischen Bearbeitungsantriebseinheit, als eine Bearbeitungsbeschleunigung der angetriebenen Bodenpflegevorrichtung oder als ein anderer, einem Fachmann als sinnvoll erscheinender Bearbeitungsparameter ausgebildet.

Die Erfassungseinheit und/oder die Steuer- und/oder Regeleinheit sind/ist insbesondere dazu eingerichtet, in Abhängigkeit von dem erfassten Lastparameter der elektrischen Vortriebsantriebseinheit und/oder der elektrischen Bearbeitungsantriebseinheit die Fortbewegungsgeschwindigkeit und/oder die Bearbeitungsgeschwindigkeit der angetriebenen Bodenpflegevorrichtung zu ermitteln. Alternativ ist vorstellbar, dass die Steuer- und/oder Regeleinheit dazu eingerichtet ist, die elektrische Vortriebsantriebseinheit und/oder die elektrische Bearbeitungsantriebseinheit in Abhängigkeit von dem erfassten Lastparameter der elektrischen Vortriebsantriebseinheit und/oder der elektrischen Bearbeitungsantriebseinheit anzusteuern, insbesondere frei von einer Ermittlung der Fortbewegungsgeschwindigkeit und/oder der Bearbeitungsgeschwindigkeit. Insbesondere sind/ist die Fortbewegungsgeschwindigkeit und/oder die Bearbeitungsgeschwindigkeit der angetriebenen Bodenpflegevorrichtung abhängig von dem Lastparameter der elektrischen Vortriebsantriebseinheit und/oder der elektrischen Bearbeitungsantriebseinheit. Alternativ oder zusätzlich ist denkbar, dass die Erfassungseinheit dazu eingerichtet ist, die Fortbewegungsgeschwindigkeit und/oder die Bearbeitungsgeschwindigkeit der angetriebenen Bodenpflegevorrichtung direkt zu erfassen. Bevorzugt ist die Erfassungseinheit, insbesondere zumindest ein Erfassungselement der Erfassungseinheit, elektrisch mit der elektrischen Vortriebsantriebseinheit und/oder mit der elektrischen Bearbeitungsantriebseinheit, insbesondere mit zumindest einem Elektromotor der elektrischen Vortriebsantriebseinheit und/oder der elektrischen Bearbeitungsantriebseinheit, verbunden. Insbesondere ist jeweils ein Erfassungselement der Erfassungseinheit jeweils einem Elektromotor der elektrischen Vortriebsantriebseinheit und/oder der elektrischen Bearbeitungsantriebseinheit zugeordnet. Vorzugsweise sind die Erfassungselemente als Strommessgeräte, insbesondere zu einer Erfassung eines Motorstroms, und/oder als Spannungsmessgeräte, insbesondere zu einer Erfassung einer Motorspannung, ausgebildet. Alternativ ist denkbar, dass die Erfassungselemente als Drehzahlmesser, als Temperatursensoren o. dgl. ausgebildet sind. Vorzugsweise erfasst die Erfassungseinheit an unterschiedlichen Positionen auf einem Boden unterschiedliche Lastparameter der elektrischen Vortriebsantriebseinheit und/oder der elektrischen Bearbeitungsantriebseinheit, beispielsweise in Abhängigkeit von einer Vegetationshöhe, insbesondere einer Grashöhe, einer Vegetationsdichte, insbesondere einer Grasdichte, einer Schmutzdichte, insbesondere einer Staubdichte, einem Gefälle, einer Untergrundbeschaffenheit, beispielhaft einem trockenen Untergrund oder einem feuchten Untergrund, o. dgl.

Die Speichereinheit der Steuer- und/oder Regeleinheit ist vorzugsweise als ein nichtflüchtiger elektronischer Speicher ausgebildet. Vorzugsweise sind in der Speichereinheit Bearbeitungsparameter, insbesondere Bearbeitungsgeschwindigkeiten, insbesondere Bearbeitungsgeschwindigkeitsintervalle, der angetriebenen Bodenpflegevorrichtung und den Bearbeitungsparametern, insbesondere den Bearbeitungsgeschwindigkeiten, insbesondere den Bearbeitungsgeschwindigkeitsintervallen, zugeordnete Fortbewegungsparameter, insbesondere Fortbewegungsgeschwindigkeiten, hinterlegt. Insbesondere ist einem Bearbeitungsparameter, insbesondere einer Bearbeitungsgeschwindigkeit, insbesondere einem Bearbeitungsgeschwindigkeitsintervall, der/die/das einen höheren Wert aufweist als ein/eine/ein weiterer Bearbeitungsparameter, insbesondere als eine weitere Bearbeitungsgeschwindigkeit, insbesondere ein weiteres Bearbeitungsgeschwindigkeitsintervall, ein/eine größerer Fortbewegungsparameter, insbesondere eine höhere Fortbewegungsgeschwindigkeit, zugeordnet als dem weiteren Bearbeitungsparameter, insbesondere als der weiteren Bearbeitungsgeschwindigkeit, insbesondere dem weiteren Bearbeitungsgeschwindigkeitsintervall. Beispielhaft ist denkbar, dass einem Bearbeitungsgeschwindigkeitsintervall entsprechend einer Drehzahl der Bearbeitungseinheit zwischen 2900 und 3000 Umdrehungen pro Minute (U/m) eine Fortbewegungsgeschwindigkeit von 7 km/h und einem weiteren Bearbeitungsgeschwindigkeitsintervall entsprechend einer Drehzahl der Bearbeitungseinheit zwischen 2000 und 2100 U/m eine Fortbewegungsgeschwindigkeit von 2,5 km/h zugeordnet ist.

Bevorzugt ist die Steuer- und/oder Regeleinheit dazu eingerichtet, den erfassten Fortbewegungsparameter, insbesondere die erfasste Fortbewegungsgeschwindigkeit, und den erfassten Fortbewegungsparameter, insbesondere die erfasste Bearbeitungsgeschwindigkeit, mit den hinterlegten Fortbewegungsparametern, insbesondere Fortbewegungsgeschwindigkeiten, und mit den hinterlegten Bearbeitungsparametern, insbesondere Bearbeitungsgeschwindigkeiten, insbesondere Bearbeitungsgeschwindigkeitsintervallen, zu vergleichen und in Abhängigkeit von dem Vergleich die elektrische Vortriebsantriebseinheit zu einer Regelung der Fortbewegungsgeschwindigkeit und/oder die elektrische Bearbeitungsantriebseinheit zu einer Regelung der Bearbeitungsgeschwindigkeit anzusteuern. Insbesondere ist die Steuer- und/oder Regeleinheit dazu eingerichtet, die elektrische Vortriebsantriebseinheit derart anzusteuern, dass in Abhängigkeit von einem erfassten Bearbeitungsparameter, insbesondere von einer erfassten Bearbeitungsgeschwindigkeit, der/die in der Speichereinheit hinterlegt einem kleineren Fortbewegungsparameter, insbesondere einer geringeren Fortbewegungsgeschwindigkeit, als einem erfassten Fortbewegungsparameter, insbesondere als einer erfassten Fortbewegungsgeschwindigkeit, zugeordnet ist, die Fortbewegungsgeschwindigkeit reduziert wird, insbesondere auf die in der Speichereinheit hinterlegt dem erfassten Bearbeitungsparameter, insbesondere der erfassten Bearbeitungsgeschwindigkeit, zugeordnete Fortbewegungsgeschwindigkeit. Insbesondere ist die Steuer- und/oder Regeleinheit dazu eingerichtet, die elektrische Vortriebsantriebseinheit derart anzusteuern, dass in Abhängigkeit von einem erfassten Bearbeitungsparameter, insbesondere von einer erfassten Bearbeitungsgeschwindigkeit, der/die in der Speichereinheit hinterlegt einem größeren Fortbewegungsparameter, insbesondere einer höheren Fortbewegungsgeschwindigkeit, als einem erfassten Fortbewegungsparameter, insbesondere einer erfassten Fortbewegungsgeschwindigkeit, zugeordnet ist, die Fortbewegungsgeschwindigkeit erhöht wird, insbesondere auf die in der Speichereinheit hinterlegt dem erfassten Bearbeitungsparameter, insbesondere der erfassten Bearbeitungsgeschwindigkeit, zugeordnete Fortbewegungsgeschwindigkeit. Beispielhaft ist denkbar, dass die Steuer- und/oder Regeleinheit dazu eingerichtet ist, die elektrische Vortriebsantriebseinheit derart anzusteuern, dass in Abhängigkeit von einer erfassten Bearbeitungsgeschwindigkeit entsprechend einer Drehzahl der Bearbeitungseinheit von 2300 U/m und in Abhängigkeit von einer erfassten Fortbewegungsgeschwindigkeit von 5 km/h, die Fortbewegungsgeschwindigkeit reduziert wird, beispielsweise auf 4 km/. Beispielhaft ist denkbar, dass die Steuer- und/oder Regeleinheit dazu eingerichtet ist, die elektrische Vortriebsantriebseinheit derart anzusteuern, dass in Abhängigkeit von einer erfassten Bearbeitungsgeschwindigkeit entsprechend einer Drehzahl der Bearbeitungseinheit von 2300 U/m und in Abhängigkeit von einer erfassten Fortbewegungsgeschwindigkeit von 3 km/h, die Fortbewegungsgeschwindigkeit erhöht wird, beispielsweise auf 4 km/h.

Insbesondere ist die Steuer- und/oder Regeleinheit dazu eingerichtet, die elektrische Bearbeitungsantriebseinheit derart anzusteuern, dass in Abhängigkeit von einem erfassten Fortbewegungsparameter, insbesondere von einer erfassten Fortbewegungsgeschwindigkeit, der/die in der Speichereinheit hinterlegt einem kleineren Bearbeitungsparameter, insbesondere einer geringeren Bearbeitungsgeschwindigkeit, als einem erfassten Bearbeitungsparameter, insbesondere als einer erfassten Bearbeitungsgeschwindigkeit, zugeordnet ist, die Bearbeitungsgeschwindigkeit reduziert wird, insbesondere auf die in der Speichereinheit hinterlegt dem erfassten Fortbewegungsparameter, insbesondere der erfassten Fortbewegungsgeschwindigkeit, zugeordnete Bearbeitungsgeschwindigkeit, Insbesondere ist die Steuer- und/oder Regeleinheit dazu eingerichtet, die elektrische Bearbeitungsantriebseinheit derart anzusteuern, dass in Abhängigkeit von einem erfassten Fortbewegungsparameter, insbesondere von einer erfassten Fortbewegungsgeschwindigkeit, der/die in der Speichereinheit hinterlegt einem größeren Bearbeitungsparameter, insbesondere einer höheren Bearbeitungsgeschwindigkeit, als einem erfassten Bearbeitungsparameter, insbesondere einer erfassten Bearbeitungsgeschwindigkeit, zugeordnet ist, die Bearbeitungsgeschwindigkeit erhöht wird, insbesondere auf die in der Speichereinheit hinterlegt dem erfassten Fortbewegungsparameter, insbesondere der erfassten Fortbewegungsgeschwindigkeit, zugeordnete Bearbeitungsgeschwindigkeit.

Vorzugsweise sind/ist die Steuer- und/oder Regeleinheit und/oder die Erfassungseinheit dazu eingerichtet, einen Mittelwert einer Mehrzahl von Messungen des Bearbeitungsparameters, insbesondere der Bearbeitungsgeschwindigkeit, zu ermitteln, der insbesondere von der Steuer- und/oder Regeleinheit mit dem hinterlegten Bearbeitungsparameter, insbesondere mit der hinterlegten Bearbeitungsgeschwindigkeit, insbesondere mit dem hinterlegten Bearbeitungsgeschwindigkeitsintervall, zu einer Ansteuerung der elektrischen Vortriebsantriebseinheit verglichen wird. Vorzugsweise sind/ist die Steuer- und/oder Regeleinheit und/oder die Erfassungseinheit dazu eingerichtet, einen Mittelwert einer Mehrzahl von Messungen des Fortbewegungsparameters, insbesondere der Fortbewegungsgeschwindigkeit, zu ermitteln, der insbesondere von der Steuer- und/oder Regeleinheit mit dem hinterlegten Fortbewegungsparameter, insbesondere mit der hinterlegten Fortbewegungsgeschwindigkeit, zu einer Ansteuerung der elektrischen Bearbeitungsantriebseinheit verglichen wird.

Vorzugsweise ist die Steuer- und/oder Regeleinheit dazu eingerichtet, in Abhängigkeit von dem zumindest einen von der Erfassungseinheit erfassten Fortbewegungsparameter und/oder in Abhängigkeit von dem zumindest einen von der Erfassungseinheit erfassten Bearbeitungsparameter die elektrische Vortriebsantriebseinheit zu einer Regelung der Fortbewegungsgeschwindigkeit oder die elektrische Bearbeitungsantriebseinheit zu einer Regelung der Bearbeitungsgeschwindigkeit anzusteuern. Insbesondere kann die angetriebene Bodenpflegevorrichtung zumindest zwei verschiedene Betriebsmodi aufweisen, wobei die Steuer- und/oder Regeleinheit in einem Betriebsmodus dazu eingerichtet ist, in Abhängigkeit von dem zumindest einen von der Erfassungseinheit erfassten Fortbewegungsparameter und/oder in Abhängigkeit von dem zumindest einen von der Erfassungseinheit erfassten Bearbeitungsparameter die elektrische Vortriebsantriebseinheit zu einer Regelung der Fortbewegungsgeschwindigkeit anzusteuern, und wobei die Steuer- und/oder Regeleinheit in einem weiteren Betriebsmodus dazu eingerichtet ist, in Abhängigkeit von dem zumindest einen von der Erfassungseinheit erfassten Fortbewegungsparameter und/oder in Abhängigkeit von dem zumindest einen von der Erfassungseinheit erfassten Bearbeitungsparameter die elektrische Bearbeitungsantriebseinheit zu einer Regelung der Bearbeitungsgeschwindigkeit anzusteuern. Insbesondere können die Betriebsmodi von einem Nutzer der angetriebenen Bodenpflegevorrichtung manuell auswählbar und/oder von der Steuer- und/oder Regeleinheit automatisch auswählbar sein, insbesondere in Abhängigkeit von zumindest einem Randparameter, beispielsweise von einer Untergrundbeschaffenheit, von einer Tageszeit, von einer Wettervorhersage, von einem Ladezustand eines Akkus o. dgl.

Durch die erfindungsgemäße Ausgestaltung der angetriebenen Bodenpflegevorrichtung kann vorteilhaft eine automatische Regulierung einer Fortbewegungsgeschwindigkeit und/oder einer Bearbeitungsgeschwindigkeit ermöglicht werden. Vorteilhaft kann eine angetriebene Bodenpflegevorrichtung bereitgestellt werden, die eine gleichmäßige Pflege eines Bodens ermöglicht. Vorteilhaft kann eine nutzerkomfortable angetriebene Bodenpflegevorrichtung bereitgestellt werden, die eine vorteilhaft zeiteffiziente Bodenpflege ermöglicht.

Des Weiteren wird vorgeschlagen, dass die Steuer- und/oder Regeleinheit dazu eingerichtet ist, die elektrische Vortriebsantriebseinheit zu einer stufenweisen Regelung der Fortbewegungsgeschwindigkeit in Abhängigkeit von vorgegebenen, insbesondere in zumindest einer Speichereinheit der Steuer- und/oder Regeleinheit hinterlegten, Beschleunigungsdaten anzusteuern. Insbesondere kann ein Teil der Beschleunigungsdaten als positive Werte und ein weiterer Teil der Beschleunigungsdaten als negative Werte ausgebildet sein. Beschleunigungsdaten mit negativen Werten sind insbesondere als Bremsdaten ausgebildet. Die Beschleunigungsdaten geben insbesondere vor, mit welcher Beschleunigung eine Erhöhung oder eine Erniedrigung der Fortbewegungsgeschwindigkeit auf eine in der Speichereinheit hinterlegt einer erfassten Bearbeitungsgeschwindigkeit zugeordnete Fortbewegungsgeschwindigkeit vorgesehen ist. Vorzugsweise ist einem jeden, in der Speichereinheit hinterlegten Paar aus einem Bearbeitungsparameter, insbesondere einer Bearbeitungsgeschwindigkeit, insbesondere einem Bearbeitungsgeschwindigkeitsintervall, und einem Fortbewegungsparameter, insbesondere einer Fortbewegungsgeschwindigkeit, insbesondere einem Fortbewegungsgeschwindigkeitsintervall, ein Beschleunigungsdatum zugeordnet. Vorzugsweise ist einem Paar aus einem Bearbeitungsparameter, insbesondere einer Bearbeitungsgeschwindigkeit, und einem Fortbewegungsparameter, insbesondere einer Fortbewegungsgeschwindigkeit, je größer der Bearbeitungsparameter, insbesondere je höher die Bearbeitungsgeschwindigkeit, und je kleiner der Fortbewegungsparameter, insbesondere je geringer die Fortbewegungsgeschwindigkeit, ist, ein desto höheres, insbesondere hohes positives, Beschleunigungsdatum zugeordnet. Vorzugsweise ist einem Paar aus einem Bearbeitungsparameter, insbesondere einer Bearbeitungsgeschwindigkeit, und einem Fortbewegungsparameter, insbesondere einer Fortbewegungsgeschwindigkeit, je kleiner der Bearbeitungsparameter, insbesondere je geringer die Bearbeitungsgeschwindigkeit, und je größer der Fortbewegungsparameter, insbesondere je höher die Fortbewegungsgeschwindigkeit, ist, ein desto niedrigeres, insbesondere hohes negatives, Beschleunigungsdatum zugeordnet. Bevorzugt ist die Steuer- und/oder Regeleinheit dazu eingerichtet, die elektrische Vortriebsantriebseinheit derart anzusteuern, dass die Fortbewegungsgeschwindigkeit mit einer einem Paar aus einem erfassten Bearbeitungsparameter, insbesondere einer erfassten Bearbeitungsgeschwindigkeit, und einem erfassten Fortbewegungsparameter, insbesondere einer erfassten Fortbewegungsgeschwindigkeit, zugeordneten, in der Speichereinheit hinterlegten Beschleunigung auf eine dem erfassten Bearbeitungsparameter, insbesondere der erfassten Bearbeitungsgeschwindigkeit, zugeordnete, in der Speichereinheit hinterlegte Fortbewegungsgeschwindigkeit geregelt wird. Vorteilhaft kann eine sanfte, insbesondere zumindest im Wesentlichen ruckfreie, Anpassung der Fortbewegungsgeschwindigkeit ermöglicht werden. Vorteilhaft kann eine nutzerkomfortabel bedienbare angetriebene Bodenpflegevorrichtung bereitgestellt werden.

Ferner wird vorgeschlagen, dass die Beschleunigungsdaten zumindest eine hystereseartige Beschleunigungs- und/oder Bremskennlinie der elektrischen Vortriebsantriebseinheit vorgeben. Bevorzugt entspricht eine einem bestimmten Fortbewegungsparameter, insbesondere einer bestimmten Fortbewegungsgeschwindigkeit, zugeordnete Bremskennlinie einer dem bestimmten Fortbewegungsparameter, insbesondere der bestimmten Fortbewegungsgeschwindigkeit, zugeordneten Beschleunigungskennlinie. Alternativ ist denkbar, dass eine einem bestimmten Fortbewegungsparameter, insbesondere einer bestimmten Fortbewegungsgeschwindigkeit, zugeordnete Bremskennlinie verschieden von einer dem bestimmten Fortbewegungsparameter, insbesondere der bestimmten Fortbewegungsgeschwindigkeit, zugeordneten Beschleunigungskennlinie ausgebildet ist. Darunter, dass "die Beschleunigungsdaten zumindest eine hystereseartige Beschleunigungs- und/oder Bremskennlinie der elektrischen Vortriebsantriebseinheit vorgeben", soll insbesondere verstanden werden, dass die Beschleunigungsdaten eine bezogen auf einen erfassten Bearbeitungsparameter, insbesondere auf eine erfasste Bearbeitungsgeschwindigkeit, und/oder auf einen erfassten Fortbewegungsparameter, insbesondere auf eine erfasste Fortbewegungsgeschwindigkeit, eine variant verzögerte Anpassung der Fortbewegungsgeschwindigkeit vorgeben. Insbesondere ist die von den Beschleunigungsdaten vorgegebene Beschleunigungs- und/oder Bremskennlinie nichtlinear ausgebildet. Insbesondere sind/ist die Beschleunigungsdaten, insbesondere die von den Beschleunigungsdaten vorgegebene Beschleunigungs- und/oder Bremskennlinie, derart ausgebildet, dass eine Geschwindigkeit, mit der die Fortbewegungsgeschwindigkeit der angetriebenen Bodenpflegevorrichtung angepasst wird, insbesondere eine Fortbewegungsbeschleunigung der angetriebenen Bodenpflegevorrichtung, abhängig ist von einem erfassten Bearbeitungsparameter, insbesondere von einer erfassten Bearbeitungsgeschwindigkeit, und/oder von einem erfassten Fortbewegungsparameter, insbesondere von einer erfassten Fortbewegungsgeschwindigkeit. Insbesondere ist eine durch die Beschleunigungsdaten vorgegebene Fortbewegungsbeschleunigung der angetriebenen Bodenpflegevorrichtung nicht proportional zu einem erfassten Bearbeitungsparameter, insbesondere zu einer erfassten Bearbeitungsgeschwindigkeit, und/oder zu einem erfassten Fortbewegungsparameter, insbesondere zu einer erfassten Fortbewegungsgeschwindigkeit. Vorzugsweise geben die Beschleunigungsdaten eine Mehrzahl von Beschleunigungs- und/oder Bremskennlinien vor, insbesondere eine Anzahl von Beschleunigungs- und/oder Bremskennlinien, die einer Anzahl von in der Speichereinheit hinterlegten Fortbewegungsparametern, insbesondere Fortbewegungsgeschwindigkeiten, der angetriebenen Bodenpflegevorrichtung entspricht. Bevorzugt beschreiben zumindest zwei Beschleunigungs- und/oder Bremskennlinien, die zwei unterschiedlichen Fortbewegungsparametern, insbesondere Fortbewegungsgeschwindigkeiten, zugeordnet sind, ein hystereseartiges Beschleunigungsverhalten bei einem Übergang zwischen den zwei Fortbewegungsparametern, insbesondere Fortbewegungsgeschwindigkeiten. Vorteilhaft kann eine schnelle Reaktion auf starke Änderungen der Bearbeitungsgeschwindigkeit bei einem gleichzeitig ruhigen Betrieb der angetriebenen Bodenpflegevorrichtung ermöglicht werden.

Weiterhin wird vorgeschlagen, dass die Beschleunigungsdaten, insbesondere die zumindest eine hystereseartige Beschleunigungs- und/oder Bremskennlinie, eine Beschleunigung für einen Übergang von zumindest einem Fortbewegungsparameter, insbesondere von zumindest einer Fortbewegungsgeschwindigkeit, auf zumindest einen weiteren Fortbewegungsparameter, insbesondere auf zumindest eine weitere Fortbewegungsgeschwindigkeit, vorgeben/vorgibt, die einer inversen Beschleunigung für einen Übergang von dem zumindest einen weiteren Fortbewegungsparameter, insbesondere von der zumindest einen weiteren Fortbewegungsgeschwindigkeit, auf den zumindest einen Fortbewegungsparameter, insbesondere auf die zumindest eine Fortbewegungsgeschwindigkeit, entspricht. Vorzugsweise geben zumindest eine dem Fortbewegungsparameter, insbesondere der Fortbewegungsgeschwindigkeit, zugeordnete Beschleunigungs- und/oder Bremskennlinie und eine weitere, dem weiteren Fortbewegungsparameter, insbesondere der weiteren Fortbewegungsgeschwindigkeit, zugeordnete Beschleunigungskennlinie eine Beschleunigung für einen Übergang von dem Fortbewegungsparameter, insbesondere von der Fortbewegungsgeschwindigkeit, auf den weiteren Fortbewegungsparameter, insbesondere auf die weitere Fortbewegungsgeschwindigkeit, vor, die einer inversen Beschleunigung für einen Übergang von dem weiteren Fortbewegungsparameter, insbesondere von der weiteren Fortbewegungsgeschwindigkeit, auf den Fortbewegungsparameter, insbesondere auf die Fortbewegungsgeschwindigkeit, entspricht. Insbesondere ist ein von den Beschleunigungsdaten vorgegebener Beschleunigungsbetrag für einen Übergang zwischen zwei verschiedenen Fortbewegungsparametern, insbesondere Fortbewegungsgeschwindigkeiten, unabhängig von einer Richtung des Übergangs gleich groß. Beispielhaft ist denkbar, dass einem bestimmten Bearbeitungsparameter, insbesondere einer bestimmten Bearbeitungsgeschwindigkeit, ein bestimmter Fortbewegungsparameter, insbesondere eine bestimmte Fortbewegungsgeschwindigkeit, zugeordnet ist. In Abhängigkeit von einer Änderung des Bearbeitungsparameters, insbesondere der Bearbeitungsgeschwindigkeit, zu einem weiteren Bearbeitungsparameter, insbesondere zu einer weiteren Bearbeitungsgeschwindigkeit, geben die Beschleunigungsdaten insbesondere eine Beschleunigung für einen Übergang von dem Fortbewegungsparameter, insbesondere von der Fortbewegungsgeschwindigkeit, auf einen weiteren/eine weitere, dem weiteren Bearbeitungsparameter, insbesondere der weiteren Bearbeitungsgeschwindigkeit, zugeordneten/zugeordnete Fortbewegungsparameter, insbesondere Fortbewegungsgeschwindigkeit, vor. In Abhängigkeit von einer Änderung des weiteren Bearbeitungsparameters, insbesondere der weiteren Bearbeitungsgeschwindigkeit, auf den Bearbeitungsparameter, insbesondere auf die Bearbeitungsgeschwindigkeit, geben die Beschleunigungsdaten insbesondere eine weitere Beschleunigung für einen Übergang von dem weiteren Fortbewegungsparameter, insbesondere von der weiteren Fortbewegungsgeschwindigkeit, auf den Fortbewegungsparameter, insbesondere auf die Fortbewegungsgeschwindigkeit, vor, wobei die weitere Beschleunigung insbesondere der inversen Beschleunigung entspricht. Bevorzugt geben die Beschleunigungsdaten, insbesondere die hystereseartigen Beschleunigungs- und/oder Bremskennlinien, eine Beschleunigung für einen Übergang von einem/einer beliebigen in der Speichereinheit hinterlegten Fortbewegungsparameter, insbesondere Fortbewegungsgeschwindigkeit, auf einen/eine beliebigen/beliebige weiteren/weitere, in der Speichereinheit hinterlegten/hinterlegte Fortbewegungsparameter, insbesondere Fortbewegungsgeschwindigkeit, vor, die der inversen Beschleunigung für einen Übergang von dem beliebigen weiteren Fortbewegungsparameter, insbesondere von der beliebigen weiteren Fortbewegungsgeschwindigkeit, auf den beliebigen Fortbewegungsparameter, insbesondere auf die beliebige Fortbewegungsgeschwindigkeit, entspricht. Vorteilhaft können gleichmäßige Beschleunigungen und Bremsungen für die Übergänge zwischen Paaren von Fortbewegungsparametern, insbesondere Fortbewegungsgeschwindigkeiten, und ein sanfter Beschleunigungsbetrieb der angetriebenen Bodenpflegevorrichtung ermöglicht werden.

Zudem wird vorgeschlagen, dass die Steuer- und/oder Regeleinheit dazu eingerichtet ist, die elektrische Vortriebsantriebseinheit zu einer Regelung der Fortbewegungsgeschwindigkeit in Abhängigkeit von einer Änderung des zumindest einen Bearbeitungsparameters, insbesondere der Bearbeitungsgeschwindigkeit, mit einer variablen Änderungsrate anzusteuern. Vorzugsweise geben die Beschleunigungsdaten, insbesondere die hystereseartigen Beschleunigungs- und/oder Bremskennlinien, die Änderungsrate in Abhängigkeit von in der Speichereinheit hinterlegten Bearbeitungsparametern, insbesondere Bearbeitungsgeschwindigkeiten, insbesondere Bearbeitungsgeschwindigkeitsintervallen, vor. Insbesondere ist die Beschleunigung der angetriebenen Bodenpflegevorrichtung abhängig von, insbesondere proportional zu, der Änderungsrate, mit der die Steuer- und/oder Regeleinheit die elektrische Vortriebsantriebseinheit ansteuert. Insbesondere ist die Änderungsrate, insbesondere die Beschleunigung, desto größer, je größer eine Änderung des Bearbeitungsparameters, insbesondere der Bearbeitungsgeschwindigkeit, insbesondere außerhalb eines Bearbeitungsgeschwindigkeitsintervalls, ist. Vorzugsweise ist eine Änderungsrate, insbesondere eine Beschleunigung, für eine Änderung des Bearbeitungsparameters, insbesondere der Bearbeitungsgeschwindigkeit, zu einem weiteren Bearbeitungsparameter innerhalb eines, insbesondere in der Speichereinheit hinterlegten, Bearbeitungsparameterintervalls, insbesondere zu einer weiteren Bearbeitungsgeschwindigkeit innerhalb eines, insbesondere in der Speichereinheit hinterlegten, Bearbeitungsgeschwindigkeitsintervalls, gleich groß wie eine Änderungsrate, insbesondere eine Beschleunigung, für eine Änderung des Bearbeitungsparameters, insbesondere der Bearbeitungsgeschwindigkeit, zu einem beliebigen anderen Bearbeitungsparameter innerhalb des Bearbeitungsparameterintervalls, insbesondere zu einer beliebigen anderen Bearbeitungsgeschwindigkeit innerhalb des Bearbeitungsgeschwindigkeitsintervalls. Vorteilhaft kann eine, eine vorteilhafte Balance zwischen einer stetigen Fortbewegung der angetriebenen Bodenpflegevorrichtung und eines gleichmäßigen Pflegeergebnisses ermöglichende Sensitivitätsabstimmung der Steuer- und/oder Regeleinheit bereitgestellt werden.

Des Weiteren wird vorgeschlagen, dass die Steuer- und/oder Regeleinheit dazu eingerichtet ist, den Mittelwert des zumindest einen Bearbeitungsparameters in Abhängigkeit von zumindest drei, innerhalb von höchstens 50 Millisekunden erfassten Bearbeitungsparametern und/oder den Mittelwert des zumindest einen Fortbewegungsparameters in Abhängigkeit von zumindest drei, innerhalb von höchstens 50 Millisekunden erfassten Fortbewegungsparametern zu ermitteln. Alternativ oder zusätzlich ist denkbar, dass die Erfassungseinheit dazu eingerichtet ist, den Mittelwert des zumindest einen Bearbeitungsparameters in Abhängigkeit von zumindest drei, innerhalb von höchstens 50 Millisekunden (ms) erfassten Bearbeitungsparametern und/oder den Mittelwert des zumindest einen Fortbewegungsparameters in Abhängigkeit von zumindest drei, innerhalb von höchstens 50 Millisekunden erfassten Fortbewegungsparametern zu ermitteln. Insbesondere sind/ist die Steuer- und/oder Regeleinheit und/oder die Erfassungseinheit dazu eingerichtet, den Mittelwert des zumindest einen Bearbeitungsparameters in Abhängigkeit von zumindest drei, bevorzugt zumindest vier und besonders bevorzugt zumindest fünf, insbesondere innerhalb von höchstens 50 ms, bevorzugt innerhalb von höchstens 40 ms und besonders bevorzugt innerhalb von höchstens 30 ms erfassten Bearbeitungsparametern zu ermitteln. Insbesondere sind/ist die Steuer- und/oder Regeleinheit und/oder die Erfassungseinheit dazu eingerichtet, den Mittelwert des zumindest einen Fortbewegungsparameters in Abhängigkeit von zumindest drei, bevorzugt zumindest vier und besonders bevorzugt zumindest fünf, insbesondere innerhalb von höchstens 50 ms, bevorzugt innerhalb von höchstens 40 ms und besonders bevorzugt innerhalb von höchstens 30 ms erfassten Fortbewegungsparametern zu ermitteln. Vorzugsweise ist die Steuer- und/oder Regeleinheit dazu eingerichtet, die elektrische Vortriebsantriebseinheit, insbesondere zu einer Regelung der Fortbewegungsgeschwindigkeit, in Abhängigkeit von dem ermittelten Mittelwert des zumindest einen Bearbeitungsparameters anzusteuern. Vorzugsweise ist die Steuer- und/oder Regeleinheit dazu eingerichtet, die elektrische Bearbeitungsantriebseinheit, insbesondere zu einer Regelung der Bearbeitungsgeschwindigkeit, in Abhängigkeit von dem ermittelten Mittelwert des zumindest einen Fortbewegungsparameters anzusteuern. Es kann eine vorteilhaft präzise Ansteuerung der elektrischen Vortriebsantriebseinheit und/oder der elektrischen Bearbeitungsantriebseinheit zu einer Realisierung eines effizienten Pflegebetriebs ermöglicht werden.

Ferner wird vorgeschlagen, dass die Steuer- und/oder Regeleinheit dazu eingerichtet ist, in Abhängigkeit von zumindest einem erfassten Fortbewegungsparameter, insbesondere von einer erfassten Fortbewegungsgeschwindigkeit, größer als zumindest ein Grenzfortbewegungsparameter, insbesondere als eine Grenzfortbewegungsgeschwindigkeit, und/oder in Abhängigkeit von zumindest einem erfassten Bearbeitungsparameter, insbesondere von zumindest einem erfassten Lastparameter der elektrischen Bearbeitungsantriebseinheit, größer als zumindest ein Grenzbearbeitungsparameter, insbesondere als ein Grenzlastparameter, die elektrische Bearbeitungsantriebseinheit zu einer Regelung der Bearbeitungsgeschwindigkeit auf eine Maximalbearbeitungsgeschwindigkeit anzusteuern. Insbesondere sind/ist der zumindest eine Grenzfortbewegungsparameter und/oder der zumindest eine Grenzbearbeitungsparameter in der Speichereinheit der Steuer- und/oder Regeleinheit hinterlegt. Vorzugsweise sind/ist der zumindest eine Grenzfortbewegungsparameter und/oder der zumindest eine Grenzbearbeitungsparameter einstellbar, insbesondere in Abhängigkeit von einem Betriebsmodus, von einem Anwendungsgebiet o. dgl. Alternativ ist denkbar, dass der zumindest eine Grenzfortbewegungsparameter und/oder zumindest eine Grenzbearbeitungsparameter unveränderlich vorgegeben sind. Bevorzugt sind/ist in der Speichereinheit der Steuer- und/oder Regeleinheit ein einzelner Grenzfortbewegungsparameter und/oder ein einzelner Grenzbearbeitungsparameter hinterlegt. Alternativ ist denkbar, dass in der Speichereinheit der Steuer- und/oder Regeleinheit eine Mehrzahl von Grenzfortbewegungsparametern und/oder eine Mehrzahl von Grenzbearbeitungsparametern hinterlegt ist. Insbesondere ist denkbar, dass in der Speichereinheit der Steuer- und/oder Regeleinheit zumindest zwei betragsweise unterschiedliche Grenzfortbewegungsparameter und/oder zumindest zwei betragsweise unterschiedliche Grenzbearbeitungsparameter hinterlegt sind, insbesondere zu einer Realisierung eines hystereseartigen Steuerverhaltens. Insbesondere können in der Speichereinheit der Steuer- und/oder Regeleinheit zumindest zwei Grenzfortbewegungsparameter und/oder zumindest zwei Grenzbearbeitungsparameter unterschiedlicher Art, beispielsweise ein als eine Grenzfortbewegungsgeschwindigkeit ausgebildeter Grenzfortbewegungsparameter und ein weiterer, als eine Grenzlast der elektrischen Vortriebsantriebseinheit ausgebildeter Grenzfortbewegungsparameter. Die Maximalbearbeitungsgeschwindigkeit kann beispielhaft als eine Bearbeitungsgeschwindigkeit entsprechend einer Drehzahl der Bearbeitungseinheit von 2900 U/m ausgebildet sein.

Der zumindest eine Grenzfortbewegungsparameter ist vorzugsweise als eine Grenzfortbewegungsgeschwindigkeit ausgebildet. Vorzugsweise ist der zumindest eine Grenzfortbewegungsparameter als eine Grenzfortbewegungsgeschwindigkeit schneller als 0 km/h oder als eine Grenzfortbewegungsgeschwindigkeit entsprechend einer Drehzahl des zumindest einen Fortbewegungselements schneller als 0 U/m ausgebildet, beispielsweise als eine Grenzfortbewegungsgeschwindigkeit von 0,3 km/h oder als eine Grenzfortbewegungsgeschwindigkeit entsprechend einer Drehzahl des zumindest einen Fortbewegungselements von 100 U/min. Alternativ ist denkbar, dass der zumindest eine Grenzfortbewegungsparameter als eine Grenzfortbewegungsgeschwindigkeit von 0 km/h oder als eine Grenzfortbewegungsgeschwindigkeit entsprechend einer Drehzahl des zumindest einen Fortbewegungselements von 0 U/m ausgebildet ist. Der zumindest eine Grenzfortbewegungsparameter kann auch als ein von einer Geschwindigkeit verschiedener Parameter, wie beispielsweise als ein Grenzlastparameter der elektrischen Vortriebsantriebseinheit, als eine Grenzfortbewegungsbeschleunigung, als eine Grenzdrehzahl der elektrischen Vortriebsantriebseinheit oder als ein anderer, einem Fachmann als sinnvoll erscheinender Grenzfortbewegungsparameter ausgebildet sein.

Der zumindest eine Grenzbearbeitungsparameter ist vorzugsweise als ein Grenzlastparameter, insbesondere der elektrischen Bearbeitungsantriebseinheit, ausgebildet. Insbesondere ist der zumindest eine Grenzbearbeitungsparameter als ein Grenzlastparameter größer als ein elektrischer Laststrom von 0 Ampere ausgebildet, beispielsweise als ein Grenzlastparameter entsprechend einem elektrischen Laststrom von 10 Ampere. Alternativ ist denkbar, dass der zumindest eine Grenzbearbeitungsparameter als ein Grenzlastparameter entsprechend einem elektrischen Laststrom von 0 Ampere ausgebildet ist. Der zumindest eine Grenzbearbeitungsparameter kann auch als ein von einer Last verschiedener Parameter, wie beispielsweise als eine Grenzbearbeitungsgeschwindigkeit, als eine Grenzbearbeitungsbeschleunigung, als eine Grenzdrehzahl der elektrischen Bearbeitungsantriebseinheit oder als ein anderer, einem Fachmann als sinnvoll erscheinender Grenzbearbeitungsparameter ausgebildet sein.

Vorzugsweise ist die Steuer- und/oder Regeleinheit dazu eingerichtet, in Abhängigkeit von zumindest einem erfassten Fortbewegungsparameter, insbesondere von einer erfassten Fortbewegungsgeschwindigkeit, größer als der Grenzfortbewegungsparameter, insbesondere als die Grenzfortbewegungsgeschwindigkeit, die elektrische Bearbeitungsantriebseinheit zu einer Regelung der Bearbeitungsgeschwindigkeit auf die Maximalbearbeitungsgeschwindigkeit anzusteuern, insbesondere unabhängig von zumindest einem erfassten Bearbeitungsparameter. Vorzugsweise ist die Steuer- und/oder Regeleinheit dazu eingerichtet, in Abhängigkeit von zumindest einem erfassten Bearbeitungsparameter, insbesondere von zumindest einem erfassten Lastparameter der elektrischen Bearbeitungsantriebseinheit, größer als der Grenzbearbeitungsparameter, insbesondere als der Grenzlastparameter, die elektrische Bearbeitungsantriebseinheit zu einer Regelung der Bearbeitungsgeschwindigkeit auf die Maximalbearbeitungsgeschwindigkeit anzusteuern, insbesondere unabhängig von zumindest einem erfassten Fortbewegungsparameter. Insbesondere kann ein erfasster Bearbeitungsparameter, insbesondere ein erfasster Lastparameter der elektrischen Bearbeitungsantriebseinheit, einer stillstehenden angetriebenen Bodenpflegevorrichtung größer sein als der Grenzbearbeitungsparameter, insbesondere als der Grenzlastparameter, beispielhaft in Abhängigkeit von hohem und/oder dichtem Gras an einem Standpunkt der angetriebenen Bodenpflegevorrichtung. Vorteilhaft kann situationsabhängig eine Maximalbearbeitungsgeschwindigkeit bereitgestellt werden. Es kann eine vorteilhaft gründliche Bodenpflege ermöglicht werden.

Weiterhin wird vorgeschlagen, dass die Steuer- und/oder Regeleinheit dazu eingerichtet ist, in Abhängigkeit von zumindest einem erfassten Fortbewegungsparameter, insbesondere von einer erfassten Fortbewegungsgeschwindigkeit, kleiner als der Grenzfortbewegungsparameter, insbesondere als die Grenzfortbewegungsgeschwindigkeit, und in Abhängigkeit von zumindest einem erfassten Bearbeitungsparameter, insbesondere von zumindest einem erfassten Lastparameter der elektrischen Bearbeitungsantriebseinheit, kleiner als der Grenzbearbeitungsparameter, insbesondere als der Grenzlastparameter, die elektrische Bearbeitungsantriebseinheit zu einer Regelung der Bearbeitungsgeschwindigkeit auf eine Leerlaufbearbeitungsgeschwindigkeit anzusteuern. Die Leerlaufbearbeitungsgeschwindigkeit ist vorzugsweise geringer als die Maximalbearbeitungsgeschwindigkeit. Vorzugsweise ist die Leerlaufbearbeitungsgeschwindigkeit als eine Bearbeitungsgeschwindigkeit schneller als 0 km/h oder als eine Bearbeitungsgeschwindigkeit entsprechend einer Drehzahl der Bearbeitungseinheit schneller als 0 U/m ausgebildet, beispielsweise als eine Bearbeitungsgeschwindigkeit entsprechend einer Drehzahl der Bearbeitungseinheit von 2000 U/min. Alternativ ist denkbar, dass die Leerlaufbearbeitungsgeschwindigkeit als eine Bearbeitungsgeschwindigkeit von 0 km/h oder als eine Bearbeitungsgeschwindigkeit entsprechend einer Drehzahl der Bearbeitungseinheit von 0 U/m ausgebildet ist. Vorteilhaft kann eine energieeffizient betreibbare, lärmbelästigungsarme und verschleißarme angetriebene Bodenpflegevorrichtung bereitgestellt werden.

Ferner geht die Erfindung aus von einem Verfahren zum Betrieb einer angetriebenen Bodenpflegevorrichtung, insbesondere einer erfindungsgemäßen angetriebenen Bodenpflegevorrichtung mit den Merkmalen des Anspruch 7.

Es wird vorgeschlagen, dass in zumindest einem Verfahrensschritt zumindest eine elektrische Vortriebsantriebseinheit der angetriebenen Bodenpflegevorrichtung zu einer stufenweisen Regelung einer Fortbewegungsgeschwindigkeit der angetriebenen Bodenpflegevorrichtung in Abhängigkeit von zumindest einem von zumindest einer Erfassungseinheit der angetriebenen Bodenpflegevorrichtung erfassten Fortbewegungsparameter und in Abhängigkeit von zumindest einem von der Erfassungseinheit erfassten Bearbeitungsparameter, insbesondere in Abhängigkeit von einem Mittelwert einer Mehrzahl von Messungen des zumindest einen Bearbeitungsparameters, angesteuert wird und/oder dass in dem zumindest einen Verfahrensschritt zumindest eine elektrische Bearbeitungsantriebseinheit der angetriebenen Bodenpflegevorrichtung zu einer stufenweisen Regelung einer Bearbeitungsgeschwindigkeit der angetriebenen Bodenpflegevorrichtung in Abhängigkeit von zumindest einem von der Erfassungseinheit erfassten Fortbewegungsparameter, insbesondere in Abhängigkeit von einem Mittelwert einer Mehrzahl von Messungen des zumindest einen Fortbewegungsparameters, und in Abhängigkeit von zumindest einem von der Erfassungseinheit erfassten Bearbeitungsparameter angesteuert wird. Bevorzugt werden/wird die elektrische Vortriebsantriebseinheit von der Steuer- und/oder Regeleinheit zu einer stufenweisen Regelung der Fortbewegungsgeschwindigkeit und/oder wird die elektrische Bearbeitungsantriebseinheit von der Steuer- und/oder Regeleinheit zu einer stufenweisen Regelung der Bearbeitungsgeschwindigkeit angesteuert. Alternativ oder zusätzlich ist denkbar, dass die elektrische Vortriebsantriebseinheit und/oder die elektrische Bearbeitungsantriebseinheit von einer separat von der angetriebenen Bodenpflegevorrichtung ausgebildeten, externen Einheit, beispielsweise einer Servereinheit, insbesondere über eine Kommunikationseinheit der angetriebenen Bodenpflegevorrichtung angesteuert werden/wird. Vorteilhaft kann ein Verfahren zu einer automatischen Regulierung der Fortbewegungsgeschwindigkeit und/oder der Bearbeitungsgeschwindigkeit bereitgestellt werden. Vorteilhaft kann ein Verfahren bereitgestellt werden, mittels dessen eine gleichmäßige Pflege eines Bodens ermöglicht wird. Es kann ein vorteilhaft nutzerkomfortables Verfahren bereitgestellt werden, das eine vorteilhaft zeiteffiziente Bodenpflege ermöglicht.

Weiterhin wird vorgeschlagen, dass in zumindest einem Verfahrensschritt die elektrische Vortriebsantriebseinheit zu einer stufenweisen Regelung der Fortbewegungsgeschwindigkeit in Abhängigkeit von vorgegebenen, insbesondere in zumindest einer Speichereinheit zumindest einer Steuer- und/oder Regeleinheit der angetriebenen Bodenpflegevorrichtung hinterlegten, Beschleunigungsdaten angesteuert wird. Alternativ oder zusätzlich ist denkbar, dass die Beschleunigungsdaten in einer Speichereinheit der externen Einheit hinterlegt sind und insbesondere von der externen Einheit und/oder von der Steuer- und/oder Regeleinheit, insbesondere über die Kommunikationseinheit der angetriebenen Bodenpflegevorrichtung, zu einer Ansteuerung der elektrischen Vortriebsantriebseinheit genutzt werden. Vorteilhaft kann ein Verfahren zu einer sanften insbesondere zumindest im Wesentlichen ruckfreien, Anpassung der Fortbewegungsgeschwindigkeit bereitgestellt werden.

Zudem wird vorgeschlagen, dass in zumindest einem Verfahrensschritt die elektrische Vortriebsantriebseinheit zu einer Regelung der Fortbewegungsgeschwindigkeit in Abhängigkeit von einer Änderung des zumindest einen Bearbeitungsparameters, insbesondere der Bearbeitungsgeschwindigkeit, mit einer variablen Änderungsrate angesteuert wird. Vorteilhaft kann ein Verfahren bereitgestellt werden, das eine vorteilhafte Balance zwischen einer stetigen Fortbewegung der angetriebenen Bodenpflegevorrichtung und eines gleichmäßigen Pflegeergebnisses ermöglicht.

Des Weiteren wird vorgeschlagen, dass in zumindest einem Verfahrensschritt der Mittelwert des zumindest einen Bearbeitungsparameters in Abhängigkeit von zumindest drei, innerhalb von höchstens 50 Millisekunden erfassten Bearbeitungsparametern und/oder der Mittelwert des zumindest einen Fortbewegungsparameters in Abhängigkeit von zumindest drei, innerhalb von höchstens 50 Millisekunden erfassten Fortbewegungsparametern ermittelt werden/wird. Vorteilhaft kann ein Verfahren bereitgestellt werden, das eine vorteilhaft präzise Ansteuerung der elektrischen Vortriebsantriebseinheit und/oder der elektrischen Bearbeitungsantriebseinheit zu einer Realisierung eines effizienten Pflegebetriebs ermöglicht.

Ferner wird vorgeschlagen, dass in zumindest einem Verfahrensschritt in Abhängigkeit von zumindest einem erfassten Fortbewegungsparameter, insbesondere von einer erfassten Fortbewegungsgeschwindigkeit, größer als ein Grenzfortbewegungsparameter, insbesondere als eine Grenzfortbewegungsgeschwindigkeit, und/oder in Abhängigkeit von zumindest einem erfassten Bearbeitungsparameter, insbesondere von zumindest einem erfassten Lastparameter der elektrischen Bearbeitungsantriebseinheit, größer als ein Grenzbearbeitungsparameter, insbesondere als ein Grenzlastparameter, die elektrische Bearbeitungsantriebseinheit zu einer Regelung der Bearbeitungsgeschwindigkeit auf eine Maximalbearbeitungsgeschwindigkeit angesteuert wird. Vorteilhaft kann ein Verfahren zu einer situationsabhängigen Bereitstellung einer Maximalbearbeitungsgeschwindigkeit bereitgestellt werden. Es kann ein Verfahren bereitgestellt werden, das eine vorteilhaft gründliche Bodenpflege ermöglicht.

Weiterhin wird vorgeschlagen, dass in zumindest einem Verfahrensschritt in Abhängigkeit von zumindest einem erfassten Fortbewegungsparameter, insbesondere von einer erfassten Fortbewegungsgeschwindigkeit, kleiner als der Grenzfortbewegungsparameter, insbesondere als die Grenzfortbewegungsgeschwindigkeit, und in Abhängigkeit von zumindest einem erfassten Bearbeitungsparameter, insbesondere von zumindest einem erfassten Lastparameter der elektrischen Bearbeitungsantriebseinheit, kleiner als der Grenzbearbeitungsparameter, insbesondere als der Grenzlastparameter, die elektrische Bearbeitungsantriebseinheit zu einer Regelung der Bearbeitungsgeschwindigkeit auf eine Leerlaufbearbeitungsgeschwindigkeit angesteuert wird. Vorteilhaft kann ein Verfahren bereitgestellt werden, das einen energieeffizienten, lärmbelästigungsarmen und verschleißarmen Betrieb der angetriebenen Bodenpflegevorrichtung ermöglicht.

Die erfindungsgemäße angetriebene Bodenpflegevorrichtung und/oder das erfindungsgemäße Verfahren sollen/soll hierbei nicht auf die oben beschriebene Anwendung und Ausführungsform beschränkt sein. Insbesondere können/kann die erfindungsgemäße angetriebene Bodenpflegevorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße angetriebene Bodenpflegevorrichtung in einer perspektivischen Darstellung,
- Fig. 2: ein Blockdiagramm der erfindungsgemäßen angetriebenen Bodenpflegevorrichtung aus Fig. 1 in einer schematischen Darstellung,
- Fig. 3: ein Diagramm mit Beschleunigungs- und/oder Bremskennlinien der erfindungsgemäßen angetriebenen Bodenpflegevorrichtung aus Fig. 1 in einer schematischen Darstellung,
- Fig. 4: ein Ablaufdiagramm eines erfindungsgemäßen Verfahrens zu einem Betrieb der erfindungsgemäßen angetriebenen Bodenpflegevorrichtung aus Fig. 1 in einer schematischen Darstellung und
- Fig. 5: ein weiteres Ablaufdiagramm des erfindungsgemäßen Verfahrens zu einem Betrieb der erfindungsgemäßen angetriebenen Bodenpflegevorrichtung aus Fig. 1 in einer schematischen Darstellung.

### Beschreibung des Ausführungsbeispiels

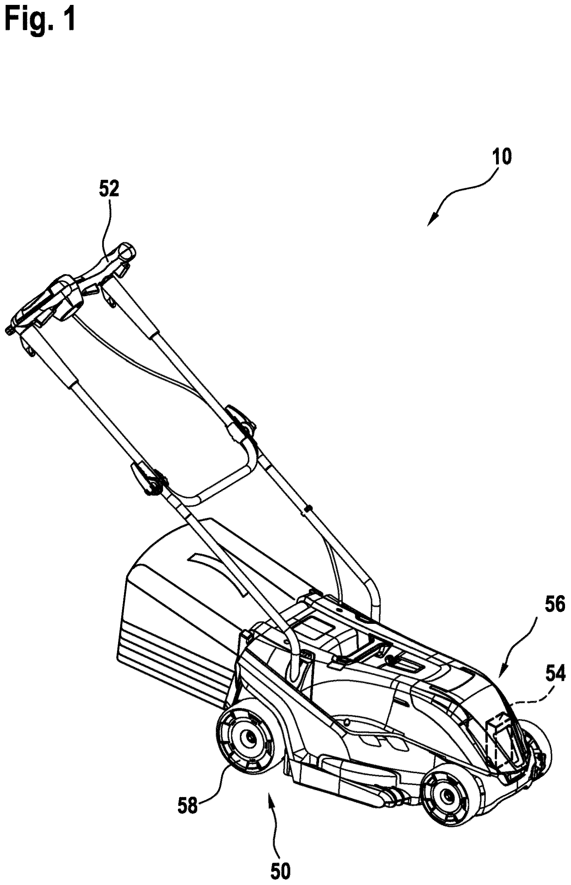

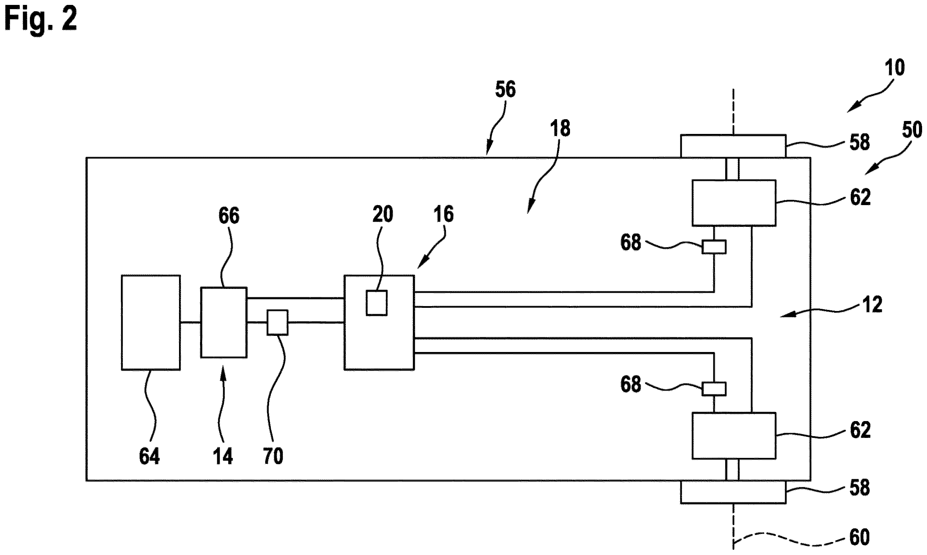

Figur 1 zeigt eine angetriebene Bodenpflegevorrichtung 10, insbesondere einen akkubetriebenen Rasenmäher, in einer perspektivischen Darstellung. Die angetriebene Bodenpflegevorrichtung 10 ist vorzugsweise zu einer Pflege, insbesondere zu einer Bearbeitung, eines Bodens, beispielsweise eines Rasens, eines Fußbodens, eines Gehwegs o. dgl., vorgesehen. Die angetriebene Bodenpflegevorrichtung 10 weist bevorzugt eine elektrische Vortriebsantriebseinheit 12 auf, die dazu vorgesehen ist, zumindest eine Fortbewegungseinheit 50 der angetriebenen Bodenpflegevorrichtung 10 zu einer Fortbewegung über einen Boden oder zumindest zu einer Unterstützung einer Fortbewegung über einen Boden anzutreiben (vgl. Figur 2). Die angetriebene Bodenpflegevorrichtung 10 kann insbesondere als ein handgeführter Rasenmäher, als ein autonomer Rasenmäher, als ein Aufsitzrasenmäher, als ein handgeführter Staubsauger, als ein autonomer Staubsauger, als eine Putzmaschine, insbesondere als ein Putzroboter oder als eine Aufsitzputzmaschine, oder als eine andere, einem Fachmann als sinnvoll erscheinende, angetriebene Bodenpflegevorrichtung ausgebildet sein. Im vorliegenden Ausführungsbeispiel ist die angetriebene Bodenpflegevorrichtung 10 beispielhaft als ein handgeführter Rasenmäher ausgebildet. Insbesondere weist die angetriebene Bodenpflegevorrichtung 10 zumindest einen Handgriff 52 zu einer Führung der angetriebenen Bodenpflegevorrichtung 10 auf. Insbesondere ist die angetriebene Bodenpflegevorrichtung 10 dazu vorgesehen, einen als einen Rasen ausgebildeten Boden zu mähen, einen als einen Fußboden ausgebildeten Boden zu saugen und/oder zu putzen o. dgl. Im vorliegenden Ausführungsbeispiel ist die angetriebene Bodenpflegevorrichtung 10 beispielhaft dazu vorgesehen, einen als einen Rasen ausgebildeten Boden zu mähen (hier nicht weiter dargestellt). Bevorzugt ist die angetriebene Bodenpflegevorrichtung 10 als eine mit elektrischer Energie betreibbare angetriebene Bodenpflegevorrichtung, insbesondere als eine akkubetriebene angetriebene Bodenpflegevorrichtung ausgebildet. Insbesondere weist die angetriebene Bodenpflegevorrichtung 10 zumindest einen Akku 54 auf. Vorzugsweise ist der Akku 54 innerhalb einer Gehäuseeinheit 56 der angetriebenen Bodenpflegevorrichtung 10 angeordnet.

Figur 2 zeigt ein Blockdiagramm der angetriebenen Bodenpflegevorrichtung 10 aus Fig. 1 in einer schematischen Darstellung. Die angetriebene Bodenpflegevorrichtung 10 umfasst insbesondere zumindest eine elektrische Vortriebsantriebseinheit 12, zumindest eine elektrische Bearbeitungsantriebseinheit 14, zumindest eine Steuer- und/oder Regeleinheit 16, die dazu eingerichtet ist, die elektrische Vortriebsantriebseinheit 12 zu einer Regelung einer Fortbewegungsgeschwindigkeit und/oder die elektrische Bearbeitungsantriebseinheit 14 zu einer Regelung einer Bearbeitungsgeschwindigkeit anzusteuern, und zumindest eine Erfassungseinheit 18, die zu einer Erfassung von zumindest einem Fortbewegungsparameter und/oder von zumindest einem Bearbeitungsparameter, insbesondere von zumindest einem Lastparameter der elektrischen Vortriebsantriebseinheit 12 und/oder der elektrischen Bearbeitungsantriebseinheit 14, eingerichtet ist. Bevorzugt ist die Steuer- und/oder Regeleinheit 16 dazu eingerichtet, die elektrische Vortriebsantriebseinheit 12 zu einer stufenweisen Regelung der Fortbewegungsgeschwindigkeit in Abhängigkeit von zumindest einem von der Erfassungseinheit 18 erfassten Fortbewegungsparameter und in Abhängigkeit von zumindest einem von der Erfassungseinheit 18 erfassten Bearbeitungsparameter, insbesondere in Abhängigkeit von einem Mittelwert einer Mehrzahl von Messungen des zumindest einen Bearbeitungsparameters, anzusteuern und/oder dazu eingerichtet, die elektrische Bearbeitungsantriebseinheit 14 zu einer stufenweisen Regelung der Bearbeitungsgeschwindigkeit in Abhängigkeit von zumindest einem von der Erfassungseinheit 18 erfassten Fortbewegungsparameter, insbesondere in Abhängigkeit von einem Mittelwert einer Mehrzahl von Messungen des zumindest einen Fortbewegungsparameters, und in Abhängigkeit von zumindest einem von der Erfassungseinheit 18 erfassten Bearbeitungsparameter anzusteuern.

Vorzugsweise ist die Erfassungseinheit 18 dazu eingerichtet, zumindest einen Fortbewegungsparameter, insbesondere die Fortbewegungsgeschwindigkeit, und/oder zumindest einen Bearbeitungsparameter, insbesondere die Bearbeitungsgeschwindigkeit, zu erfassen. Bevorzugt ist die Steuer- und/oder Regeleinheit 16 dazu eingerichtet, die elektrische Vortriebsantriebseinheit 12 zu einer stufenweisen Regelung der Fortbewegungsgeschwindigkeit in Abhängigkeit von zumindest einem von der Erfassungseinheit 18 erfassten Fortbewegungsparameter, insbesondere von einer von der Erfassungseinheit 18 erfassten Fortbewegungsgeschwindigkeit, und in Abhängigkeit von zumindest einem von der Erfassungseinheit 18 erfassten Bearbeitungsparameter, insbesondere in Abhängigkeit von einer von der Erfassungseinheit 18 erfassten Bearbeitungsgeschwindigkeit, insbesondere in Abhängigkeit von einem Mittelwert einer Mehrzahl von Messungen des zumindest einen Bearbeitungsparameters, insbesondere einer Mehrzahl von Messungen der Bearbeitungsgeschwindigkeit, anzusteuern und/oder dazu eingerichtet, die elektrische Bearbeitungsantriebseinheit 14 zu einer stufenweisen Regelung der Bearbeitungsgeschwindigkeit in Abhängigkeit von zumindest einem von der Erfassungseinheit 18 erfassten Fortbewegungsparameter, insbesondere in Abhängigkeit von einer von der Erfassungseinheit 18 erfassten Fortbewegungsgeschwindigkeit, insbesondere in Abhängigkeit von einem Mittelwert einer Mehrzahl von Messungen des zumindest einen Fortbewegungsparameters, insbesondere einer Mehrzahl von Messungen der Fortbewegungsgeschwindigkeit, und in Abhängigkeit von zumindest einem von der Erfassungseinheit 18 erfassten Bearbeitungsparameter, insbesondere in Abhängigkeit von einer von der Erfassungseinheit 18 erfassten Bearbeitungsgeschwindigkeit, anzusteuern.

Die Fortbewegungseinheit 50 ist vorzugsweise zu einem Vortrieb über einen Boden vorgesehen. Insbesondere umfasst die Fortbewegungseinheit 50 zumindest ein Fortbewegungselement 58, bevorzugt zumindest zwei Fortbewegungselemente 58. Im vorliegenden Ausführungsbeispiel umfasst die Fortbewegungseinheit 50 beispielhaft zwei Fortbewegungselemente 58. Die Fortbewegungselemente 58 sind vorzugsweise als Antriebsräder ausgebildet, die insbesondere um eine Radachse 60 der Fortbewegungseinheit 50 rotatorisch antreibbar sind. Alternativ ist denkbar, dass die Fortbewegungselemente 58 als Roboterbeine, als Vortriebsketten oder als andere, einem Fachmann als sinnvoll erscheinende Fortbewegungselemente ausgebildet sind. Die elektrische Vortriebsantriebseinheit 12 ist vorzugsweise zu einem Antrieb der Fortbewegungseinheit 50, insbesondere der Fortbewegungselemente 58 vorgesehen. Insbesondere umfasst die elektrische Vortriebsantriebseinheit 12 zumindest einen Elektromotor 62 zu einem Antrieb der Fortbewegungseinheit 50. Bevorzugt umfasst die elektrische Vortriebsantriebseinheit 12 eine Anzahl von Elektromotoren 62 entsprechend einer Anzahl von anzutreibenden Fortbewegungselementen 58, wobei insbesondere jeweils ein Elektromotor 62 zu einem Antrieb jeweils eines Fortbewegungselements 58 vorgesehen ist. Im vorliegenden Ausführungsbeispiel weist die elektrische Vortriebsantriebseinheit 12 beispielhaft zwei Elektromotoren 62 auf.

Vorzugsweise umfasst die angetriebene Bodenpflegevorrichtung 10 zumindest eine Bearbeitungseinheit 64, die zu einer Pflege, insbesondere zu einer Bearbeitung, eines Bodens vorgesehen ist. Die Bearbeitungseinheit 64 kann insbesondere als ein Mähwerk, als eine Staubsaugerbürste, als eine Putzbürste, insbesondere als eine Polierbürste, oder als eine andere, einem Fachmann als sinnvoll erscheinende Bearbeitungseinheit ausgebildet sein. Im vorliegenden Ausführungsbeispiel ist die Bearbeitungseinheit 64 beispielhaft als ein Mähwerk ausgebildet. Vorzugsweise ist die elektrische Bearbeitungsantriebseinheit 14 zu einem Antrieb der Bearbeitungseinheit 64 vorgesehen. Insbesondere umfasst die elektrische Bearbeitungsantriebseinheit 14 zumindest einen Elektromotor 66 zu einem Antrieb der Bearbeitungseinheit 64.

Die Steuer- und/oder Regeleinheit 16 ist vorzugsweise zu einer Steuerung und/oder Regelung der elektrischen Vortriebsantriebseinheit 12 und/oder der elektrischen Bearbeitungsantriebseinheit 14, insbesondere zu einer Regelung einer der elektrischen Vortriebsantriebseinheit 12 und/oder der elektrischen Bearbeitungsantriebseinheit 14 zugeführten elektrischen Energie, eingerichtet. Insbesondere kann die Steuer- und/oder Regeleinheit 16 zu einer Steuerung und/oder Regelung von weiteren Funktionen und/oder Parametern der angetriebenen Bodenpflegevorrichtung 10, beispielhaft zu einer Steuerung einer Navigation der angetriebenen Bodenpflegevorrichtung 10 in einem Arbeitsbereich, eingerichtet sein. Vorzugsweise ist die Steuer- und/oder Regeleinheit 16 dazu eingerichtet, über eine Ansteuerung der elektrischen Vortriebsantriebseinheit 12 eine Fortbewegungsgeschwindigkeit der angetriebenen Bodenpflegevorrichtung 10 zu regeln. Vorzugsweise ist die Steuer- und/oder Regeleinheit 16 dazu eingerichtet, über eine Ansteuerung der elektrischen Bearbeitungsantriebseinheit 14 eine Bearbeitungsgeschwindigkeit der angetriebenen Bodenpflegevorrichtung 10, beispielsweise eine Drehzahl von Schneidmessern einer als ein Mähwerk ausgebildeten Bearbeitungseinheit 64, zu regeln.

Ein Lastparameter der elektrischen Vortriebsantriebseinheit 12 bzw. ein Lastparameter der elektrischen Bearbeitungsantriebseinheit 14 ist insbesondere ein Parameter, der eine Last der elektrischen Vortriebsantriebseinheit 12 bzw. der elektrischen Bearbeitungsantriebseinheit 14 beschreibt. Vorzugsweise ist der Lastparameter der elektrischen Vortriebsantriebseinheit 12 und/oder der elektrischen Bearbeitungsantriebseinheit 14, insbesondere zumindest eines Elektromotors 62, 66 der elektrischen Vortriebsantriebseinheit 12 und/oder der elektrischen Bearbeitungsantriebseinheit 14, als ein Motorstrom und/oder als eine Motorspannung ausgebildet. Alternativ ist vorstellbar, dass der Lastparameter der elektrischen Vortriebsantriebseinheit 12 und/oder der elektrischen Bearbeitungsantriebseinheit 14 als eine Abwärme, als eine Drehzahl oder als ein anderer, einem Fachmann als sinnvoll erscheinender Lastparameter ausgebildet ist.

Der zumindest eine Fortbewegungsparameter der angetriebenen Bodenpflegevorrichtung 10 ist vorzugsweise als eine Fortbewegungsgeschwindigkeit der angetriebenen Bodenpflegevorrichtung 10, insbesondere als eine absolute Fortbewegungsgeschwindigkeit und/oder als eine Fortbewegungsgeschwindigkeit entsprechend einer Drehzahl der, insbesondere durchdrehungsfreien und blockierfreien, Fortbewegungselemente 58, als ein Lastparameter der elektrischen Vortriebsantriebseinheit 12, als eine Drehzahl der elektrischen Vortriebsantriebseinheit 12, als eine Fortbewegungsbeschleunigung der angetriebenen Bodenpflegevorrichtung 10 oder als ein anderer, einem Fachmann als sinnvoll erscheinender Fortbewegungsparameter ausgebildet. Der zumindest eine Bearbeitungsparameter der angetriebenen Bodenpflegevorrichtung 10 ist vorzugsweise als eine Bearbeitungsgeschwindigkeit der angetriebenen Bodenpflegevorrichtung 10, insbesondere als eine Bearbeitungsgeschwindigkeit entsprechend einer Drehzahl der Bearbeitungseinheit 64 und/oder als eine Rotationsgeschwindigkeit von zumindest einem Bearbeitungswerkzeug, insbesondere von zumindest einem Schneidmesser, der Bearbeitungseinheit 64, als ein Lastparameter der elektrischen Bearbeitungsantriebseinheit 14, als eine Drehzahl der elektrischen Bearbeitungsantriebseinheit 14, als eine Bearbeitungsbeschleunigung der angetriebenen Bodenpflegevorrichtung 10 oder als ein anderer, einem Fachmann als sinnvoll erscheinender Bearbeitungsparameter ausgebildet.

Die Erfassungseinheit 18 und/oder die Steuer- und/oder Regeleinheit 16 sind/ist insbesondere dazu eingerichtet, in Abhängigkeit von dem erfassten Lastparameter der elektrischen Vortriebsantriebseinheit 12 und/oder der elektrischen Bearbeitungsantriebseinheit 14 die Fortbewegungsgeschwindigkeit und/oder die Bearbeitungsgeschwindigkeit der angetriebenen Bodenpflegevorrichtung 10 zu ermitteln. Alternativ ist vorstellbar, dass die Steuer- und/oder Regeleinheit 16 dazu eingerichtet ist, die elektrische Vortriebsantriebseinheit 12 und/oder die elektrische Bearbeitungsantriebseinheit 14 in Abhängigkeit von dem erfassten Lastparameter der elektrischen Vortriebsantriebseinheit 12 und/oder der elektrischen Bearbeitungsantriebseinheit 14 anzusteuern, insbesondere frei von einer Ermittlung der Fortbewegungsgeschwindigkeit und/oder der Bearbeitungsgeschwindigkeit. Insbesondere sind/ist die Fortbewegungsgeschwindigkeit und/oder die Bearbeitungsgeschwindigkeit der angetriebenen Bodenpflegevorrichtung 10 abhängig von dem Lastparameter der elektrischen Vortriebsantriebseinheit 12 und/oder der elektrischen Bearbeitungsantriebseinheit 14. Alternativ oder zusätzlich ist denkbar, dass die Erfassungseinheit 18 dazu eingerichtet ist, die Fortbewegungsgeschwindigkeit und/oder die Bearbeitungsgeschwindigkeit der angetriebenen Bodenpflegevorrichtung 10 direkt zu erfassen. Bevorzugt ist die Erfassungseinheit 18, insbesondere zumindest ein Erfassungselement 68, 70 der Erfassungseinheit 18, elektrisch mit der elektrischen Vortriebsantriebseinheit 12 und/oder mit der elektrischen Bearbeitungsantriebseinheit 14, insbesondere mit zumindest einem Elektromotor 62, 66 der elektrischen Vortriebsantriebseinheit 12 und/oder der elektrischen Bearbeitungsantriebseinheit 14, verbunden. Insbesondere ist jeweils ein Erfassungselement 68, 70 der Erfassungseinheit 18 jeweils einem Elektromotor 62, 66 der elektrischen Vortriebsantriebseinheit 12 und/oder der elektrischen Bearbeitungsantriebseinheit 14 zugeordnet. Im vorliegenden Ausführungsbeispiel umfasst die Erfassungseinheit 18 beispielhaft drei Erfassungselemente 68, 70, wobei zwei Erfassungselemente 68 jeweils einem Elektromotor 62 der elektrischen Vortriebsantriebseinheit 12 und ein weiteres Erfassungselement 70 dem Elektromotor 66 der elektrischen Bearbeitungsantriebseinheit 14 zugeordnet sind. Vorzugsweise sind die Erfassungselemente 68, 70 als Strommessgeräte, insbesondere zu einer Erfassung eines Motorstroms, und/oder als Spannungsmessgeräte, insbesondere zu einer Erfassung einer Motorspannung, ausgebildet. Im vorliegenden Ausführungsbeispiel sind die Erfassungselemente 68, 70 beispielhaft als kombinierte Strom- und Spannungsmessgeräte zu einer Erfassung eines Motorstroms und einer Motorspannung ausgebildet. Alternativ ist denkbar, dass die Erfassungselemente 68, 70 als Drehzahlmesser, als Temperatursensoren o. dgl. ausgebildet sind. Vorzugsweise erfasst die Erfassungseinheit 18 an unterschiedlichen Positionen auf einem Boden unterschiedliche Lastparameter der elektrischen Vortriebsantriebseinheit 12 und/oder der elektrischen Bearbeitungsantriebseinheit 14, beispielsweise in Abhängigkeit von einer Vegetationshöhe, insbesondere einer Grashöhe, einer Vegetationsdichte, insbesondere einer Grasdichte, einer Schmutzdichte, insbesondere einer Staubdichte, einem Gefälle, einer Untergrundbeschaffenheit, beispielhaft einem trockenen Untergrund oder einem feuchten Untergrund, o. dgl.

Eine Speichereinheit 20 der Steuer- und/oder Regeleinheit 16 ist vorzugsweise als ein nichtflüchtiger elektronischer Speicher ausgebildet. Vorzugsweise sind in der Speichereinheit 20 Bearbeitungsparameter, insbesondere Bearbeitungsgeschwindigkeiten, insbesondere Bearbeitungsgeschwindigkeitsintervalle, der angetriebenen Bodenpflegevorrichtung 10 und den Bearbeitungsparameter, insbesondere den Bearbeitungsgeschwindigkeiten, insbesondere den Bearbeitungsgeschwindigkeitsintervallen, zugeordnete Fortbewegungsparameter, insbesondere Fortbewegungsgeschwindigkeiten, hinterlegt. Insbesondere ist einem Bearbeitungsparameter, insbesondere einer Bearbeitungsgeschwindigkeit, insbesondere einem Bearbeitungsgeschwindigkeitsintervall, der/die/das einen höheren Wert aufweist als ein/eine/ein weiterer Bearbeitungsparameter, insbesondere als eine weitere Bearbeitungsgeschwindigkeit, insbesondere ein weiteres Bearbeitungsgeschwindigkeitsintervall, ein/eine größerer Fortbewegungsparameter, insbesondere eine höhere Fortbewegungsgeschwindigkeit, zugeordnet als dem weiteren Bearbeitungsparameter, insbesondere als der weiteren Bearbeitungsgeschwindigkeit, insbesondere dem weiteren Bearbeitungsgeschwindigkeitsintervall. Beispielhaft ist denkbar, dass einem Bearbeitungsgeschwindigkeitsintervall entsprechend einer Drehzahl der Bearbeitungseinheit 64 zwischen 2900 und 3000 U/m eine Fortbewegungsgeschwindigkeit von 7 km/h und einem weiteren Bearbeitungsgeschwindigkeitsintervall entsprechend einer Drehzahl der Bearbeitungseinheit 64 zwischen 2000 und 2100 U/m eine Fortbewegungsgeschwindigkeit von 2,5 km/h zugeordnet ist.

Bevorzugt ist die Steuer- und/oder Regeleinheit 16 dazu eingerichtet, den erfassten Fortbewegungsparameter, insbesondere die erfasste Fortbewegungsgeschwindigkeit, und den erfassten Fortbewegungsparameter, insbesondere die erfasste Bearbeitungsgeschwindigkeit, mit den hinterlegten Fortbewegungsparametern, insbesondere Fortbewegungsgeschwindigkeiten, und mit den hinterlegten Bearbeitungsparametern, insbesondere Bearbeitungsgeschwindigkeiten, insbesondere Bearbeitungsgeschwindigkeitsintervallen, zu vergleichen und in Abhängigkeit von dem Vergleich die elektrische Vortriebsantriebseinheit 12 zu einer Regelung der Fortbewegungsgeschwindigkeit und/oder die elektrische Bearbeitungsantriebseinheit 14 zu einer Regelung der Bearbeitungsgeschwindigkeit anzusteuern. Insbesondere ist die Steuer- und/oder Regeleinheit 16 dazu eingerichtet, die elektrische Vortriebsantriebseinheit 12 derart anzusteuern, dass in Abhängigkeit von einem erfassten Bearbeitungsparameter, insbesondere von einer erfassten Bearbeitungsgeschwindigkeit, der/die in der Speichereinheit 20 hinterlegt einem kleineren Fortbewegungsparameter, insbesondere einer geringeren Fortbewegungsgeschwindigkeit, als einem erfassten Fortbewegungsparameter, insbesondere als einer erfassten Fortbewegungsgeschwindigkeit, zugeordnet ist, die Fortbewegungsgeschwindigkeit reduziert wird, insbesondere auf die in der Speichereinheit 20 hinterlegt dem erfassten Bearbeitungsparameter, insbesondere der erfassten Bearbeitungsgeschwindigkeit, zugeordnete Fortbewegungsgeschwindigkeit. Insbesondere ist die Steuer- und/oder Regeleinheit 16 dazu eingerichtet, die elektrische Vortriebsantriebseinheit 12 derart anzusteuern, dass in Abhängigkeit von einem erfassten Bearbeitungsparameter, insbesondere von einer erfassten Bearbeitungsgeschwindigkeit, der/die in der Speichereinheit 20 hinterlegt einem größeren Fortbewegungsparameter, insbesondere einer höheren Fortbewegungsgeschwindigkeit, als einem erfassten Fortbewegungsparameter, insbesondere einer erfassten Fortbewegungsgeschwindigkeit, zugeordnet ist, die Fortbewegungsgeschwindigkeit erhöht wird, insbesondere auf die in der Speichereinheit 20 hinterlegt dem erfassten Bearbeitungsparameter, insbesondere der erfassten Bearbeitungsgeschwindigkeit, zugeordnete Fortbewegungsgeschwindigkeit. Beispielhaft ist denkbar, dass die Steuer- und/oder Regeleinheit 16 dazu eingerichtet ist, die elektrische Vortriebsantriebseinheit 12 derart anzusteuern, dass in Abhängigkeit von einer erfassten Bearbeitungsgeschwindigkeit entsprechend einer Drehzahl der Bearbeitungseinheit 64 von 2300 U/m und in Abhängigkeit von einer erfassten Fortbewegungsgeschwindigkeit von 5 km/h, die Fortbewegungsgeschwindigkeit reduziert wird, beispielsweise auf 4 km/. Beispielhaft ist denkbar, dass die Steuer- und/oder Regeleinheit 16 dazu eingerichtet ist, die elektrische Vortriebsantriebseinheit 12 derart anzusteuern, dass in Abhängigkeit von einer erfassten Bearbeitungsgeschwindigkeit entsprechend einer Drehzahl der Bearbeitungseinheit 64 von 2300 U/m und in Abhängigkeit von einer erfassten Fortbewegungsgeschwindigkeit von 3 km/h, die Fortbewegungsgeschwindigkeit erhöht wird, beispielsweise auf 4 km/h.

Insbesondere ist die Steuer- und/oder Regeleinheit 16 dazu eingerichtet, die elektrische Bearbeitungsantriebseinheit 14 derart anzusteuern, dass in Abhängigkeit von einem erfassten Fortbewegungsparameter, insbesondere von einer erfassten Fortbewegungsgeschwindigkeit, der/die in der Speichereinheit 20 hinterlegt einem kleineren Bearbeitungsparameter, insbesondere einer geringeren Bearbeitungsgeschwindigkeit, als einem erfassten Bearbeitungsparameter, insbesondere als einer erfassten Bearbeitungsgeschwindigkeit, zugeordnet ist, die Bearbeitungsgeschwindigkeit reduziert wird, insbesondere auf die in der Speichereinheit 20 hinterlegt dem erfassten Fortbewegungsparameter, insbesondere der erfassten Fortbewegungsgeschwindigkeit, zugeordnete Bearbeitungsgeschwindigkeit. Insbesondere ist die Steuer- und/oder Regeleinheit 16 dazu eingerichtet, die elektrische Bearbeitungsantriebseinheit 14 derart anzusteuern, dass in Abhängigkeit von einem erfassten Fortbewegungsparameter, insbesondere von einer erfassten Fortbewegungsgeschwindigkeit, der/die in der Speichereinheit 20 hinterlegt einem größeren Bearbeitungsparameter, insbesondere einer höheren Bearbeitungsgeschwindigkeit, als einem erfassten Bearbeitungsparameter, insbesondere einer erfassten Bearbeitungsgeschwindigkeit, zugeordnet ist, die Bearbeitungsgeschwindigkeit erhöht wird, insbesondere auf die in der Speichereinheit 20 hinterlegt dem erfassten Fortbewegungsparameter, insbesondere der erfassten Fortbewegungsgeschwindigkeit, zugeordnete Bearbeitungsgeschwindigkeit.

Vorzugsweise sind/ist die Steuer- und/oder Regeleinheit 16 und/oder die Erfassungseinheit 18 dazu eingerichtet, einen Mittelwert einer Mehrzahl von Messungen des Bearbeitungsparameters, insbesondere der Bearbeitungsgeschwindigkeit, zu ermitteln, der insbesondere von der Steuer- und/oder Regeleinheit 16 mit dem hinterlegten Bearbeitungsparameter, insbesondere mit der hinterlegten Bearbeitungsgeschwindigkeit, insbesondere mit dem hinterlegten Bearbeitungsgeschwindigkeitsintervall, zu einer Ansteuerung der elektrischen Vortriebsantriebseinheit 12 verglichen wird. Vorzugsweise sind/ist die Steuer- und/oder Regeleinheit 16 und/oder die Erfassungseinheit 18 dazu eingerichtet, einen Mittelwert einer Mehrzahl von Messungen des Fortbewegungsparameters, insbesondere der Fortbewegungsgeschwindigkeit, zu ermitteln, der insbesondere von der Steuer- und/oder Regeleinheit 16 mit dem hinterlegen Fortbewegungsparameter, insbesondere mit der hinterlegten Fortbewegungsgeschwindigkeit, zu einer Ansteuerung der elektrischen Bearbeitungsantriebseinheit 14 verglichen wird.

Vorzugsweise ist die Steuer- und/oder Regeleinheit 16 dazu eingerichtet, in Abhängigkeit von dem zumindest einen von der Erfassungseinheit 18 erfassten Fortbewegungsparameter und/oder in Abhängigkeit von dem zumindest einen von der Erfassungseinheit 18 erfassten Bearbeitungsparameter die elektrische Vortriebsantriebseinheit 12 zu einer Regelung der Fortbewegungsgeschwindigkeit oder die elektrische Bearbeitungsantriebseinheit 14 zu einer Regelung der Bearbeitungsgeschwindigkeit anzusteuern. Insbesondere kann die angetriebene Bodenpflegevorrichtung 10 zumindest zwei verschiedene Betriebsmodi aufweisen, wobei die Steuer- und/oder Regeleinheit 16 in einem Betriebsmodus dazu eingerichtet ist, in Abhängigkeit von dem zumindest einen von der Erfassungseinheit 18 erfassten Fortbewegungsparameter und/oder in Abhängigkeit von dem zumindest einen von der Erfassungseinheit 18 erfassten Bearbeitungsparameter die elektrische Vortriebsantriebseinheit 12 zu einer Regelung der Fortbewegungsgeschwindigkeit anzusteuern, und wobei die Steuer- und/oder Regeleinheit 16 in einem weiteren Betriebsmodus dazu eingerichtet ist, in Abhängigkeit von dem zumindest einen von der Erfassungseinheit 18 erfassten Fortbewegungsparameter und/oder in Abhängigkeit von dem zumindest einen von der Erfassungseinheit 18 erfassten Bearbeitungsparameter die elektrische Bearbeitungsantriebseinheit 14 zu einer Regelung der Bearbeitungsgeschwindigkeit anzusteuern. Insbesondere können die Betriebsmodi von einem Nutzer der angetriebenen Bodenpflegevorrichtung 10 manuell auswählbar und/oder von der Steuer- und/oder Regeleinheit 16 automatisch auswählbar sein, insbesondere in Abhängigkeit von zumindest einem Randparameter, beispielsweise von einer Untergrundbeschaffenheit, von einer Tageszeit, von einer Wettervorhersage, von einem Ladezustand des Akkus 54 o. dgl.

Bevorzugt ist die Steuer- und/oder Regeleinheit 16 dazu eingerichtet, die elektrische Vortriebsantriebseinheit 12 zu einer stufenweisen Regelung der Fortbewegungsgeschwindigkeit in Abhängigkeit von vorgegebenen, insbesondere in zumindest einer Speichereinheit, insbesondere in der vorgenannten Speichereinheit 20, der Steuer- und/oder Regeleinheit 16 hinterlegten, Beschleunigungsdaten anzusteuern. Insbesondere kann ein Teil der Beschleunigungsdaten als positive Werte und ein weiterer Teil der Beschleunigungsdaten als negative Werte ausgebildet sein. Beschleunigungsdaten mit negativen Werten sind insbesondere als Bremsdaten ausgebildet. Die Beschleunigungsdaten geben insbesondere vor, mit welcher Beschleunigung eine Erhöhung oder eine Erniedrigung der Fortbewegungsgeschwindigkeit auf eine in der Speichereinheit 20 hinterlegt einer erfassten Bearbeitungsgeschwindigkeit zugeordnete Fortbewegungsgeschwindigkeit vorgesehen ist. Vorzugsweise ist einem jeden, in der Speichereinheit 20 hinterlegten Paar aus einem Bearbeitungsparameter, insbesondere einer Bearbeitungsgeschwindigkeit, insbesondere einem Bearbeitungsgeschwindigkeitsintervall, und einem Fortbewegungsparameter, insbesondere einer Fortbewegungsgeschwindigkeit, insbesondere einem Fortbewegungsgeschwindigkeitsintervall, ein Beschleunigungsdatum zugeordnet. Vorzugsweise ist einem Paar aus einem Bearbeitungsparameter, insbesondere einer Bearbeitungsgeschwindigkeit, und einem Fortbewegungsparameter, insbesondere einer Fortbewegungsgeschwindigkeit, je größer der Bearbeitungsparameter, insbesondere je höher die Bearbeitungsgeschwindigkeit, und je kleiner der Fortbewegungsparameter, insbesondere je geringer die Fortbewegungsgeschwindigkeit, ist, ein desto höheres, insbesondere hohes positives, Beschleunigungsdatum zugeordnet. Vorzugsweise ist einem Paar aus einem Bearbeitungsparameter, insbesondere einer Bearbeitungsgeschwindigkeit, und einem Fortbewegungsparameter, insbesondere einer Fortbewegungsgeschwindigkeit, je kleiner der Bearbeitungsparameter, insbesondere je geringer die Bearbeitungsgeschwindigkeit, und je größer der Fortbewegungsparameter, insbesondere je höher die Fortbewegungsgeschwindigkeit, ist, ein desto niedrigeres, insbesondere hohes negatives, Beschleunigungsdatum zugeordnet. Bevorzugt ist die Steuer- und/oder Regeleinheit 16 dazu eingerichtet, die elektrische Vortriebsantriebseinheit 12 derart anzusteuern, dass die Fortbewegungsgeschwindigkeit mit einer einem Paar aus einem erfassten Bearbeitungsparameter, insbesondere einer erfassten Bearbeitungsgeschwindigkeit, und einem erfassten Fortbewegungsparameter, insbesondere einer erfassten Fortbewegungsgeschwindigkeit, zugeordneten, in der Speichereinheit 20 hinterlegten Beschleunigung auf eine dem erfassten Bearbeitungsparameter, insbesondere der erfassten Bearbeitungsgeschwindigkeit, zugeordnete, in der Speichereinheit 20 hinterlegte Fortbewegungsgeschwindigkeit geregelt wird.

Bevorzugt ist die Steuer- und/oder Regeleinheit 16 dazu eingerichtet, den Mittelwert des zumindest einen Bearbeitungsparameters in Abhängigkeit von zumindest drei, innerhalb von höchstens 50 Millisekunden erfassten Bearbeitungsparametern und/oder den Mittelwert des zumindest einen Fortbewegungsparameters in Abhängigkeit von zumindest drei, innerhalb von höchstens 50 Millisekunden erfassten Fortbewegungsparametern zu ermitteln. Alternativ oder zusätzlich ist denkbar, dass die Erfassungseinheit 18 dazu eingerichtet ist, den Mittelwert des zumindest einen Bearbeitungsparameters in Abhängigkeit von zumindest drei, innerhalb von höchstens 50 Millisekunden erfassten Bearbeitungsparametern und/oder den Mittelwert des zumindest einen Fortbewegungsparameters in Abhängigkeit von zumindest drei, innerhalb von höchstens 50 Millisekunden erfassten Fortbewegungsparametern zu ermitteln. Insbesondere sind/ist die Steuer- und/oder Regeleinheit 16 und/oder die Erfassungseinheit 18 dazu eingerichtet, den Mittelwert des zumindest einen Bearbeitungsparameters in Abhängigkeit von zumindest drei, bevorzugt zumindest vier und besonders bevorzugt zumindest fünf, insbesondere innerhalb von höchstens 50 ms, bevorzugt innerhalb von höchstens 40 ms und besonders bevorzugt innerhalb von höchstens 30 ms erfassten Bearbeitungsparametern zu ermitteln. Insbesondere sind/ist die Steuer- und/oder Regeleinheit 16 und/oder die Erfassungseinheit 18 dazu eingerichtet, den Mittelwert des zumindest einen Fortbewegungsparameters in Abhängigkeit von zumindest drei, bevorzugt zumindest vier und besonders bevorzugt zumindest fünf, insbesondere innerhalb von höchstens 50 ms, bevorzugt innerhalb von höchstens 40 ms und besonders bevorzugt innerhalb von höchstens 30 ms erfassten Fortbewegungsparametern zu ermitteln. Vorzugsweise ist die Steuer- und/oder Regeleinheit 16 dazu eingerichtet, die elektrische Vortriebsantriebseinheit 12, insbesondere zu einer Regelung der Fortbewegungsgeschwindigkeit, in Abhängigkeit von dem ermittelten Mittelwert des zumindest einen Bearbeitungsparameters anzusteuern. Vorzugsweise ist die Steuer- und/oder Regeleinheit 16 dazu eingerichtet, die elektrische Bearbeitungsantriebseinheit 14, insbesondere zu einer Regelung der Bearbeitungsgeschwindigkeit, in Abhängigkeit von dem ermittelten Mittelwert des zumindest einen Fortbewegungsparameters anzusteuern.

Bevorzugt ist die Steuer- und/oder Regeleinheit 16 dazu eingerichtet, in Abhängigkeit von zumindest einem erfassten Fortbewegungsparameter, insbesondere von einer erfassten Fortbewegungsgeschwindigkeit, größer als zumindest ein Grenzfortbewegungsparameter, insbesondere als eine Grenzfortbewegungsgeschwindigkeit, und/oder in Abhängigkeit von zumindest einem erfassten Bearbeitungsparameter, insbesondere von zumindest einem erfassten Lastparameter der elektrischen Bearbeitungsantriebseinheit 14, größer als zumindest ein Grenzbearbeitungsparameter, insbesondere als ein Grenzlastparameter, die elektrische Bearbeitungsantriebseinheit 14 zu einer Regelung der Bearbeitungsgeschwindigkeit auf eine Maximalbearbeitungsgeschwindigkeit anzusteuern. Insbesondere sind/ist der zumindest eine Grenzfortbewegungsparameter und/oder der zumindest eine Grenzbearbeitungsparameter in der Speichereinheit 20 der Steuer- und/oder Regeleinheit 16 hinterlegt. Vorzugsweise sind/ist der zumindest eine Grenzfortbewegungsparameter und/oder der zumindest eine Grenzbearbeitungsparameter einstellbar, insbesondere in Abhängigkeit von einem Betriebsmodus, von einem Anwendungsgebiet o. dgl. Alternativ ist denkbar, dass der zumindest eine Grenzfortbewegungsparameter und/oder zumindest eine Grenzbearbeitungsparameter unveränderlich vorgegeben sind. Bevorzugt sind/ist in der Speichereinheit 20 der Steuer- und/oder Regeleinheit 16 ein einzelner Grenzfortbewegungsparameter und/oder ein einzelner Grenzbearbeitungsparameter hinterlegt. Alternativ ist denkbar, dass in der Speichereinheit 20 der Steuer- und/oder Regeleinheit 16 eine Mehrzahl von Grenzfortbewegungsparametern und/oder eine Mehrzahl von Grenzbearbeitungsparametern hinterlegt ist. Insbesondere ist denkbar, dass in der Speichereinheit 20 der Steuer- und/oder Regeleinheit 16 zumindest zwei betragsweise unterschiedliche Grenzfortbewegungsparameter und/oder zumindest zwei betragsweise unterschiedliche Grenzbearbeitungsparameter hinterlegt sind, insbesondere zu einer Realisierung eines hystereseartigen Steuerverhaltens. Insbesondere können in der Speichereinheit 20 der Steuer- und/oder Regeleinheit 16 zumindest zwei Grenzfortbewegungsparameter und/oder zumindest zwei Grenzbearbeitungsparameter unterschiedlicher Art, beispielsweise ein als eine Grenzfortbewegungsgeschwindigkeit ausgebildeter Grenzfortbewegungsparameter und ein weiterer, als eine Grenzlast der elektrischen Vortriebsantriebseinheit 12 ausgebildeter Grenzfortbewegungsparameter hinterlegt sein. Die Maximalbearbeitungsgeschwindigkeit kann beispielhaft als eine Bearbeitungsgeschwindigkeit entsprechend einer Drehzahl der Bearbeitungseinheit 64 von 2900 U/m ausgebildet sein.

Der zumindest eine Grenzfortbewegungsparameter ist vorzugsweise als eine Grenzfortbewegungsgeschwindigkeit ausgebildet. Vorzugsweise ist der zumindest eine Grenzfortbewegungsparameter als eine Grenzfortbewegungsgeschwindigkeit schneller als 0 km/h oder als eine Grenzfortbewegungsgeschwindigkeit entsprechend einer Drehzahl der Fortbewegungselemente 58 schneller als 0 U/m ausgebildet, beispielsweise als eine Grenzfortbewegungsgeschwindigkeit von 0,3 km/h oder als eine Grenzfortbewegungsgeschwindigkeit entsprechend einer Drehzahl der Fortbewegungselemente 58 von 100 U/min. Alternativ ist denkbar, dass der zumindest eine Grenzfortbewegungsparameter als eine Grenzfortbewegungsgeschwindigkeit von 0 km/h oder als eine Grenzfortbewegungsgeschwindigkeit entsprechend einer Drehzahl der Fortbewegungselemente 58 von 0 U/m ausgebildet ist. Der zumindest eine Grenzfortbewegungsparameter kann auch als ein von einer Geschwindigkeit verschiedener Parameter, wie beispielsweise als ein Grenzlastparameter der elektrischen Vortriebsantriebseinheit 12, als eine Grenzfortbewegungsbeschleunigung, als eine Grenzdrehzahl der elektrischen Vortriebsantriebseinheit 12 oder als ein anderer, einem Fachmann als sinnvoll erscheinender Grenzfortbewegungsparameter ausgebildet sein.

Der zumindest eine Grenzbearbeitungsparameter ist vorzugsweise als ein Grenzlastparameter, insbesondere der elektrischen Bearbeitungsantriebseinheit 14, ausgebildet. Insbesondere ist der zumindest eine Grenzbearbeitungsparameter als ein Grenzlastparameter größer als ein elektrischer Laststrom von 0 Ampere ausgebildet, beispielsweise als ein Grenzlastparameter entsprechend einem elektrischen Laststrom von 10 Ampere. Alternativ ist denkbar, dass der zumindest eine Grenzbearbeitungsparameter als ein Grenzlastparameter entsprechend einem elektrischen Laststrom von 0 Ampere ausgebildet ist. Der zumindest eine Grenzbearbeitungsparameter kann auch als ein von einer Last verschiedener Parameter, wie beispielsweise als eine Grenzbearbeitungsgeschwindigkeit, als eine Grenzbearbeitungsbeschleunigung, als eine Grenzdrehzahl der elektrischen Bearbeitungsantriebseinheit 14 oder als ein anderer, einem Fachmann als sinnvoll erscheinender Grenzbearbeitungsparameter ausgebildet sein.

Vorzugsweise ist die Steuer- und/oder Regeleinheit 16 dazu eingerichtet, in Abhängigkeit von zumindest einem erfassten Fortbewegungsparameter, insbesondere von einer erfassten Fortbewegungsgeschwindigkeit, größer als der Grenzfortbewegungsparameter, insbesondere als die Grenzfortbewegungsgeschwindigkeit, die elektrische Bearbeitungsantriebseinheit 14 zu einer Regelung der Bearbeitungsgeschwindigkeit auf die Maximalbearbeitungsgeschwindigkeit anzusteuern, insbesondere unabhängig von zumindest einem erfassten Bearbeitungsparameter. Vorzugsweise ist die Steuer- und/oder Regeleinheit 16 dazu eingerichtet, in Abhängigkeit von zumindest einem erfassten Bearbeitungsparameter, insbesondere von zumindest einem erfassten Lastparameter der elektrischen Bearbeitungsantriebseinheit 14, größer als der Grenzbearbeitungsparameter, insbesondere als der Grenzlastparameter, die elektrische Bearbeitungsantriebseinheit 14 zu einer Regelung der Bearbeitungsgeschwindigkeit auf die Maximalbearbeitungsgeschwindigkeit anzusteuern, insbesondere unabhängig von zumindest einem erfassten Fortbewegungsparameter. Insbesondere kann ein erfasster Bearbeitungsparameter, insbesondere ein erfasster Lastparameter der elektrischen Bearbeitungsantriebseinheit 14, einer stillstehenden angetriebenen Bodenpflegevorrichtung 10 größer sein als der Grenzbearbeitungsparameter, insbesondere als der Grenzlastparameter, beispielhaft in Abhängigkeit von hohem und/oder dichtem Gras an einem Standpunkt der angetriebenen Bodenpflegevorrichtung 10.

Bevorzugt ist die Steuer- und/oder Regeleinheit 16 dazu eingerichtet, in Abhängigkeit von zumindest einem erfassten Fortbewegungsparameter, insbesondere von einer erfassten Fortbewegungsgeschwindigkeit, kleiner als der Grenzfortbewegungsparameter, insbesondere als die Grenzfortbewegungsgeschwindigkeit, und in Abhängigkeit von zumindest einem erfassten Bearbeitungsparameter, insbesondere von zumindest einem erfassten Lastparameter der elektrischen Bearbeitungsantriebseinheit 14, kleiner als der Grenzbearbeitungsparameter, insbesondere als der Grenzlastparameter, die elektrische Bearbeitungsantriebseinheit 14 zu einer Regelung der Bearbeitungsgeschwindigkeit auf eine Leerlaufbearbeitungsgeschwindigkeit anzusteuern. Die Leerlaufbearbeitungsgeschwindigkeit ist vorzugsweise geringer als die Maximalbearbeitungsgeschwindigkeit. Vorzugsweise ist die Leerlaufbearbeitungsgeschwindigkeit als eine Bearbeitungsgeschwindigkeit schneller als 0 km/h oder als eine Bearbeitungsgeschwindigkeit entsprechend einer Drehzahl der Bearbeitungseinheit 64 schneller als 0 U/m ausgebildet, beispielsweise als eine Bearbeitungsgeschwindigkeit entsprechend einer Drehzahl der Bearbeitungseinheit 64 von 2000 U/min. Alternativ ist denkbar, dass die Leerlaufbearbeitungsgeschwindigkeit als eine Bearbeitungsgeschwindigkeit von 0 km/h oder als eine Bearbeitungsgeschwindigkeit entsprechend einer Drehzahl der Bearbeitungseinheit 64 von 0 U/m ausgebildet ist.

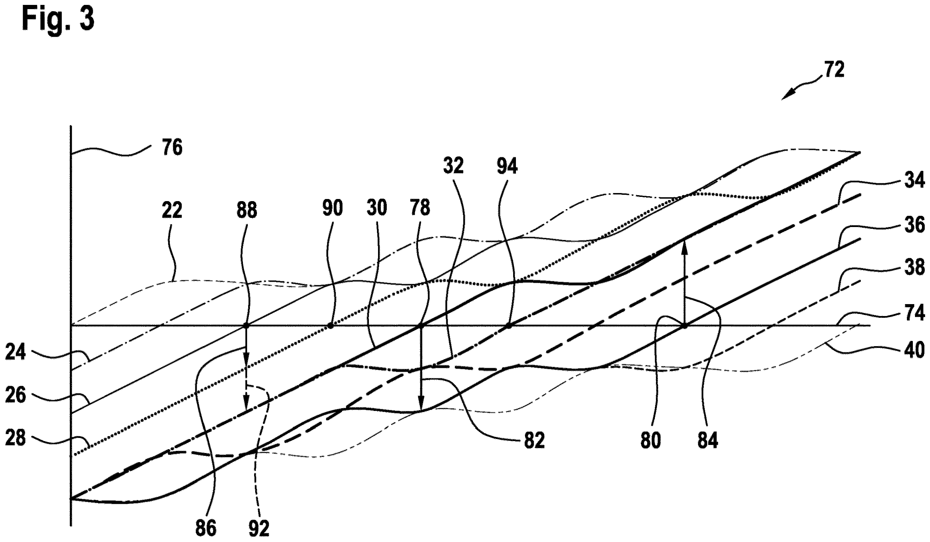

Figur 3 zeigt ein Diagramm 72 mit Beschleunigungs- und/oder Bremskennlinien 22, 24, 26, 28, 30, 32, 34, 36, 38, 40 der angetriebenen Bodenpflegevorrichtung 10 aus Fig. 1 in einer schematischen Darstellung. Das Diagramm 72 umfasst insbesondere eine Abszissenachse 74, auf der Bearbeitungsgeschwindigkeiten angetragen sind. Das Diagramm 72 umfasst insbesondere eine Ordinatenachse 76, auf der Beschleunigungs- bzw. Bremswerte aufgetragen sind. Bevorzugt geben die Beschleunigungsdaten zumindest eine hystereseartige Beschleunigungs- und/oder Bremskennlinie 22, 24, 26, 28, 30, 32, 34, 36, 38, 40 der elektrischen Vortriebsantriebseinheit 12 vor. Bevorzugt entspricht eine einem bestimmten Fortbewegungsparameter, insbesondere einer bestimmten Fortbewegungsgeschwindigkeit, zugeordnete Bremskennlinie 22, 24, 26, 28, 30, 32, 34, 36, 38, 40 einer dem bestimmten Fortbewegungsparameter, insbesondere der bestimmten Fortbewegungsgeschwindigkeit, zugeordneten Beschleunigungs- und/oder Bremskennlinie 22, 24, 26, 28, 30, 32, 34, 36, 38, 40. Alternativ ist denkbar, dass eine einem bestimmten Fortbewegungsparameter, insbesondere einer bestimmten Fortbewegungsgeschwindigkeit, zugeordnete Bremskennlinie 22, 24, 26, 28, 30, 32, 34, 36, 38, 40 verschieden von einer dem bestimmten Fortbewegungsparameter, insbesondere der bestimmten Fortbewegungsgeschwindigkeit, zugeordneten Beschleunigungs- und/oder Bremskennlinie 22, 24, 26, 28, 30, 32, 34, 36, 38, 40 ausgebildet ist. Vorzugsweise geben die Beschleunigungsdaten eine Mehrzahl von Beschleunigungs- und/oder Bremskennlinien 22, 24, 26, 28, 30, 32, 34, 36, 38, 40 vor, insbesondere eine Anzahl von Beschleunigungs- und/oder Bremskennlinien 22, 24, 26, 28, 30, 32, 34, 36, 38, 40, die einer Anzahl von in der Speichereinheit 20 hinterlegten Fortbewegungsparametern, insbesondere Fortbewegungsgeschwindigkeiten, der angetriebenen Bodenpflegevorrichtung 10 entspricht. Im vorliegenden Ausführungsbeispiel geben die Beschleunigungsdaten beispielhaft 10 verschiedene Beschleunigungs- und/oder Bremskennlinien 22, 24, 26, 28, 30, 32, 34, 36, 38, 40 vor, wobei jede der Beschleunigungs- und/oder Bremskennlinien 22, 24, 26, 28, 30, 32, 34, 36, 38, 40 einem anderen Fortbewegungsparameter, insbesondere einer anderen Fortbewegungsgeschwindigkeit, zugeordnet ist. Insbesondere ist eine erste Beschleunigungs- und/oder Bremskennlinie 22 einem kleinsten Fortbewegungsparameter, insbesondere einer langsamsten Fortbewegungsgeschwindigkeit, beispielsweise 2,5 km/h, zugeordnet. Insbesondere ist eine zehnte Beschleunigungs- und/oder Bremskennlinie 40 einem größten Fortbewegungsparameter, insbesondere einer schnellsten Fortbewegungsgeschwindigkeit, beispielsweise 7 km/h, zugeordnet. Insbesondere ist eine zweite Beschleunigungs- und/oder Bremskennlinie 24 einem größeren Fortbewegungsparameter, insbesondere einer schnelleren Fortbewegungsgeschwindigkeit, als die erste Beschleunigungs- und/oder Bremskennlinie 22, beispielsweise 3 km/h, zugeordnet. Insbesondere ist eine dritte Beschleunigungs- und/oder Bremskennlinie 26 einem größeren Fortbewegungsparameter, insbesondere einer schnelleren Fortbewegungsgeschwindigkeit, als die zweite Beschleunigungs- und/oder Bremskennlinie 24, beispielsweise 3,5 km/h, zugeordnet. Insbesondere ist eine vierte Beschleunigungs- und/oder Bremskennlinie 28 einem größeren Fortbewegungsparameter, insbesondere einer schnelleren Fortbewegungsgeschwindigkeit, als die dritte Beschleunigungs- und/oder Bremskennlinie 26, beispielsweise 4 km/h, zugeordnet. Insbesondere ist eine fünfte Beschleunigungs- und/oder Bremskennlinie 30 einem größeren Fortbewegungsparameter, insbesondere einer schnelleren Fortbewegungsgeschwindigkeit, als die vierte Beschleunigungs- und/oder Bremskennlinie 28, beispielsweise 4,5 km/h, zugeordnet. Insbesondere ist eine sechste Beschleunigungs- und/oder Bremskennlinie 32 einem größeren Fortbewegungsparameter, insbesondere einer schnelleren Fortbewegungsgeschwindigkeit, als die fünfte Beschleunigungs- und/oder Bremskennlinie 30, beispielsweise 5 km/h, zugeordnet. Insbesondere ist eine siebte Beschleunigungs- und/oder Bremskennlinie 34 einem größeren Fortbewegungsparameter, insbesondere einer schnelleren Fortbewegungsgeschwindigkeit, als die sechste Beschleunigungs- und/oder Bremskennlinie 32, beispielsweise 5,5 km/h, zugeordnet. Insbesondere ist eine achte Beschleunigungs- und/oder Bremskennlinie 36 einem größeren Fortbewegungsparameter, insbesondere einer schnelleren Fortbewegungsgeschwindigkeit, als die siebte Beschleunigungs- und/oder Bremskennlinie 34, beispielsweise 6 km/h, zugeordnet. Insbesondere ist eine neunte Beschleunigungs- und/oder Bremskennlinie 38 einem größeren Fortbewegungsparameter, insbesondere einer schnelleren Fortbewegungsgeschwindigkeit, als die siebte Beschleunigungs- und/oder Bremskennlinie 36, beispielsweise 6,5 km/h, zugeordnet.

Insbesondere sind die von den Beschleunigungsdaten vorgegebenen Beschleunigungs- und/oder Bremskennlinien 22, 24, 26, 28, 30, 32, 34, 36, 38, 40 nichtlinear ausgebildet. Insbesondere sind die Beschleunigungsdaten, insbesondere die von den Beschleunigungsdaten vorgegebenen Beschleunigungs- und/oder Bremskennlinien 22, 24, 26, 28, 30, 32, 34, 36, 38, 40, derart ausgebildet, dass eine Geschwindigkeit, mit der die Fortbewegungsgeschwindigkeit der angetriebenen Bodenpflegevorrichtung 10 angepasst wird, insbesondere eine Fortbewegungsbeschleunigung der angetriebenen Bodenpflegevorrichtung 10, abhängig ist von einem erfassten Bearbeitungsparameter, insbesondere von einer erfassten Bearbeitungsgeschwindigkeit, und/oder von einem erfassten Fortbewegungsparameter, insbesondere von einer erfassten Fortbewegungsgeschwindigkeit. Insbesondere ist eine durch die Beschleunigungsdaten vorgegebene Fortbewegungsbeschleunigung der angetriebenen Bodenpflegevorrichtung 10 nicht proportional zu einem erfassten Bearbeitungsparameter, insbesondere zu einer erfassten Bearbeitungsgeschwindigkeit, und/oder zu einem erfassten Fortbewegungsparameter, insbesondere zu einer erfassten Fortbewegungsgeschwindigkeit. Bevorzugt beschreiben zumindest zwei Beschleunigungs- und/oder Bremskennlinien 22, 24, 26, 28, 30, 32, 34, 36, 38, 40, die zwei unterschiedlichen Fortbewegungsparametern, insbesondere Fortbewegungsgeschwindigkeiten, zugeordnet sind, ein hystereseartiges Beschleunigungsverhalten bei einem Übergang zwischen den zwei Fortbewegungsparametern, insbesondere Fortbewegungsgeschwindigkeiten.

Bevorzugt geben/gibt die Beschleunigungsdaten, insbesondere die zumindest eine hystereseartige Beschleunigungs- und/oder Bremskennlinie 22, 24, 26, 28, 30, 32, 34, 36, 38, 40, eine Beschleunigung für einen Übergang von zumindest einem Fortbewegungsparameter, insbesondere von zumindest einer Fortbewegungsgeschwindigkeit, auf zumindest einen weiteren Fortbewegungsparameter, insbesondere auf zumindest eine weitere Fortbewegungsgeschwindigkeit, vor, die einer inversen Beschleunigung für einen Übergang von dem zumindest einen weiteren Fortbewegungsparameter, insbesondere von der zumindest einen weiteren Fortbewegungsgeschwindigkeit, auf den zumindest einen Fortbewegungs-parameter, insbesondere auf die zumindest eine Fortbewegungsgeschwindigkeit, entspricht. Vorzugsweise geben zumindest eine dem Fortbewegungsparameter, insbesondere der Fortbewegungsgeschwindigkeit, zugeordnete Beschleunigungs- und/oder Bremskennlinie 22, 24, 26, 28, 30, 32, 34, 36, 38, 40 und eine weitere, dem weiteren Fortbewegungsparameter, insbesondere der weiteren Fortbewegungsgeschwindigkeit, zugeordnete Beschleunigungs- und/oder Bremskennlinie 22, 24, 26, 28, 30, 32, 34, 36, 38, 40 eine Beschleunigung für einen Übergang von dem Fortbewegungsparameter, insbesondere von der Fortbewegungsgeschwindigkeit, auf den weiteren Fortbewegungsparameter, insbesondere auf die weitere Fortbewegungsgeschwindigkeit, vor, die einer inversen Beschleunigung für einen Übergang von dem weiteren Fortbewegungsparameter, insbesondere von der weiteren Fortbewegungsgeschwindigkeit, auf den Fortbewegungsparameter, insbesondere auf die Fortbewegungsgeschwindigkeit, entspricht. Insbesondere ist ein von den Beschleunigungsdaten vorgegebener Beschleunigungsbetrag für einen Übergang zwischen zwei verschiedenen Fortbewegungsparametern, insbesondere Fortbewegungsgeschwindigkeiten, unabhängig von einer Richtung des Übergangs gleich groß. Beispielhaft ist denkbar, dass einem bestimmten Bearbeitungsparameter, insbesondere einer bestimmten Bearbeitungsgeschwindigkeit, die in Figur 3 insbesondere mit einem ersten Punkt 78 markiert ist, beispielsweise 2500 U/m, ein bestimmter Fortbewegungsparameter, insbesondere eine bestimmte Fortbewegungsgeschwindigkeit, zugeordnet ist. In Abhängigkeit von einer Änderung des Bearbeitungsparameters, insbesondere der Bearbeitungsgeschwindigkeit, zu einem weiteren Bearbeitungsparameter, insbesondere zu einer weiteren Bearbeitungsgeschwindigkeit, die in Figur 3 insbesondere mit einem zweiten Punkt 80 markiert ist, beispielsweise 2800 U/m, geben die Beschleunigungsdaten insbesondere eine Beschleunigung, die in Figur 3 insbesondere mit einem ersten Pfeil 82 markiert ist, für einen Übergang von dem Fortbewegungsparameter, insbesondere von der Fortbewegungsgeschwindigkeit, der im vorliegenden Beispiel beispielhaft die fünfte Beschleunigungs- und/oder Bremskennlinie 30 zugeordnet ist, auf einen weiteren/eine weitere, dem weiteren Bearbeitungsparameter, insbesondere der weiteren Bearbeitungsgeschwindigkeit, zugeordneten/zugeordnete Fortbewegungsparameter, insbesondere Fortbewegungsgeschwindigkeit, der im vorliegenden Beispiel beispielhaft die achte Beschleunigungs- und/oder Bremskennlinie 36 zugeordnet ist, vor. In Abhängigkeit von einer Änderung des weiteren Bearbeitungsparameters, insbesondere der weiteren Bearbeitungsgeschwindigkeit, auf den Bearbeitungsparameter, insbesondere auf die Bearbeitungsgeschwindigkeit, geben die Beschleunigungsdaten insbesondere eine weitere Beschleunigung, die insbesondere mit einem zweiten Pfeil 84 markiert ist, für einen Übergang von dem weiteren Fortbewegungsparameter, insbesondere von der weiteren Fortbewegungsgeschwindigkeit, auf den Fortbewegungsparameter, insbesondere auf die Fortbewegungsgeschwindigkeit, vor, wobei die weitere Beschleunigung insbesondere der inversen Beschleunigung entspricht. Bevorzugt geben die Beschleunigungsdaten, insbesondere die hystereseartigen Beschleunigungs- und/oder Bremskennlinien 22, 24, 26, 28, 30, 32, 34, 36, 38, 40, eine Beschleunigung für einen Übergang von einem/einer beliebigen in der Speichereinheit 20 hinterlegten Fortbewegungsparameter, insbesondere Fortbewegungsgeschwindigkeit, auf einen/eine beliebigen/beliebige weiteren/weitere, in der Speichereinheit 20 hinterlegten/hinterlegte Fortbewegungsparameter, insbesondere Fortbewegungsgeschwindigkeit, vor, die der inversen Beschleunigung für einen Übergang von dem beliebigen weiteren Fortbewegungsparameter, insbesondere von der beliebigen weiteren Fortbewegungsgeschwindigkeit, auf den beliebigen Fortbewegungsparameter, insbesondere auf die beliebige Fortbewegungsgeschwindigkeit, entspricht.

Bevorzugt ist die Steuer- und/oder Regeleinheit 16 dazu eingerichtet, die elektrische Vortriebsantriebseinheit 12 zu einer Regelung der Fortbewegungsgeschwindigkeit in Abhängigkeit von einer Änderung des zumindest einen Bearbeitungsparameters, insbesondere der Bearbeitungsgeschwindigkeit, mit einer variablen Änderungsrate anzusteuern. Vorzugsweise geben die Beschleunigungsdaten, insbesondere die hystereseartigen Beschleunigungs- und/oder Bremskennlinien 22, 24, 26, 28, 30, 32, 34, 36, 38, 40, die Änderungsrate in Abhängigkeit von in der Speichereinheit 20 hinterlegten Bearbeitungsparametern, insbesondere Bearbeitungsgeschwindigkeiten, insbesondere Bearbeitungsgeschwindigkeitsintervallen, vor. Insbesondere ist die Beschleunigung der angetriebenen Bodenpflegevorrichtung 10 abhängig von, insbesondere proportional zu, der Änderungsrate, mit der die Steuer- und/oder Regeleinheit 16 die elektrische Vortriebsantriebseinheit 12 ansteuert. Insbesondere ist die Änderungsrate, insbesondere die Beschleunigung, desto größer, je größer eine Änderung des Bearbeitungsparameters, insbesondere der Bearbeitungsgeschwindigkeit, insbesondere außerhalb eines Bearbeitungsgeschwindigkeitsintervalls, ist. Beispielhaft ist in Figur 3 eine Änderungsrate, insbesondere eine Beschleunigung, die in Figur 3 insbesondere mit einem dritten Pfeil 86 markiert ist, in Abhängigkeit von einer Änderung einer, in Figur 3 insbesondere mit einem dritten Punkt 88 markierten, Bearbeitungsgeschwindigkeit, beispielsweise 2300 U/m, zu einer weiteren, in Figur 3 insbesondere mit einem vierten Punkt 90 markierten, Bearbeitungsgeschwindigkeit, beispielsweise 2400 U/m, kleiner als ein weitere Änderungsrate, insbesondere eine weitere Beschleunigung, die in Figur 3 insbesondere mit einem vierten Pfeil 92 markiert ist, in Abhängigkeit von einer Änderung der Bearbeitungsgeschwindigkeit auf eine höhere, in Figur 3 insbesondere mit einem fünften Punkt 94 markierten, Bearbeitungsgeschwindigkeit, beispielsweise 2600 U/m, als die weitere Bearbeitungsgeschwindigkeit.

Vorzugsweise ist eine Änderungsrate, insbesondere eine Beschleunigung, für eine Änderung des Bearbeitungsparameters, insbesondere der Bearbeitungsgeschwindigkeit, zu einem weiteren Bearbeitungsparameter innerhalb eines, insbesondere in der Speichereinheit 20 hinterlegten, Bearbeitungsparameterintervalls, insbesondere zu einer weiteren Bearbeitungsgeschwindigkeit innerhalb eines, insbesondere in der Speichereinheit 20 hinterlegten, Bearbeitungsgeschwindigkeitsintervalls, gleich groß wie eine Änderungsrate, insbesondere eine Beschleunigung, für eine Änderung des Bearbeitungsparameters, insbesondere der Bearbeitungsgeschwindigkeit, zu einem beliebigen anderen Bearbeitungsparameter innerhalb des Bearbeitungsparameterintervalls, insbesondere zu einer beliebigen anderen Bearbeitungsgeschwindigkeit innerhalb des Bearbeitungsgeschwindigkeitsintervalls. Beispielhaft ist in Figur 3 eine Änderungsrate, insbesondere eine Beschleunigung, die in Figur 3 insbesondere mit dem vierten Pfeil 92 markiert ist, für eine Änderung der, in Figur 3 insbesondere mit dem dritten Punkt 88 markierten, Bearbeitungsgeschwindigkeit, beispielsweise 2300 U/m, auf die, insbesondere in Figur 3 mit einem fünften Punkt 94 markierte, Bearbeitungsgeschwindigkeit, beispielsweise 2600 U/m, gleich groß wie eine Änderungsrate, insbesondere eine Beschleunigung, für eine Änderung der Bearbeitungsgeschwindigkeit auf eine niedrigere, in Figur 3 insbesondere mit dem ersten Punkt 78 markierte, Bearbeitungsgeschwindigkeit, beispielsweise 2500 U/m.

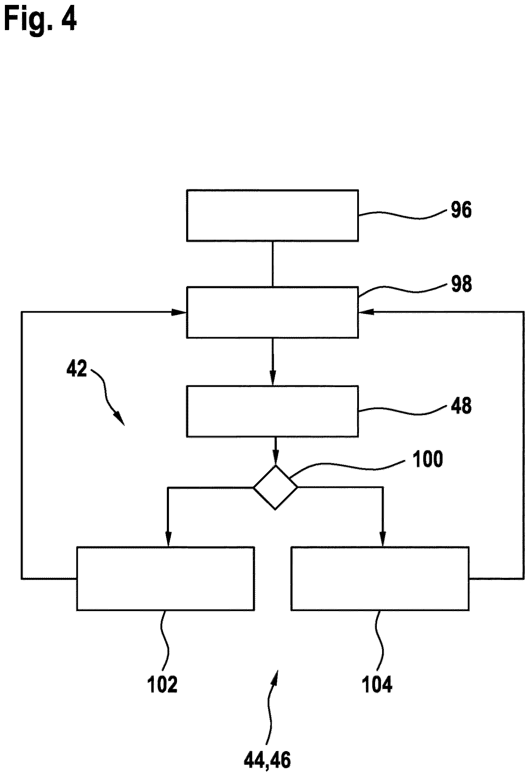

Figur 4 zeigt ein Ablaufdiagramm eines Verfahrens zu einem Betrieb einer angetriebenen Bodenpflegevorrichtung, insbesondere der angetriebenen Bodenpflegevorrichtung 10 aus Fig. 1, in einer schematischen Darstellung. Vorzugsweise wird in zumindest einem Verfahrensschritt 96 die elektrische Vortriebsantriebseinheit 12 aktiviert. Vorzugsweise werden in zumindest einem weiteren Verfahrensschritt 98 zumindest ein Bearbeitungsparameter, insbesondere eine Bearbeitungsgeschwindigkeit, und zumindest ein Fortbewegungsparameter, insbesondere eine Fortbewegungsgeschwindigkeit, erfasst.

Bevorzugt wird in zumindest einem weiteren Verfahrensschritt 48 der Mittelwert des zumindest einen Bearbeitungsparameters, insbesondere der Bearbeitungsgeschwindigkeit, in Abhängigkeit von zumindest drei, innerhalb von höchstens 50 Millisekunden erfassten Bearbeitungsparametern, insbesondere Bearbeitungsgeschwindigkeiten, ermittelt.

Bevorzugt wird in zumindest einem weiteren Verfahrensschritt 42 zumindest eine elektrische Vortriebsantriebseinheit 12 der angetriebenen Bodenpflegevorrichtung 10 zu einer stufenweisen Regelung einer Fortbewegungsgeschwindigkeit der angetriebenen Bodenpflegevorrichtung 10 in Abhängigkeit von zumindest einem von der Erfassungseinheit 18 der angetriebenen Bodenpflegevorrichtung 10 erfassten Fortbewegungsparameter, insbesondere in Abhängigkeit von einer von der Erfassungseinheit 18 der angetriebenen Bodenpflegevorrichtung 10 erfassten Fortbewegungsgeschwindigkeit, und in Abhängigkeit von zumindest einem von der Erfassungseinheit 18 erfassten Bearbeitungsparameter, insbesondere in Abhängigkeit von einer von der Erfassungseinheit 18 erfassten Bearbeitungsgeschwindigkeit, insbesondere in Abhängigkeit von einem Mittelwert einer Mehrzahl von Messungen des zumindest einen Bearbeitungsparameters, insbesondere der Bearbeitungsgeschwindigkeit, angesteuert. Bevorzugt wird die elektrische Vortriebsantriebseinheit 12 von der Steuer- und/oder Regeleinheit 16 zu einer stufenweisen Regelung der Fortbewegungsgeschwindigkeit angesteuert. Alternativ oder zusätzlich ist denkbar, dass die elektrische Vortriebsantriebseinheit 12 von einer separat von der angetriebenen Bodenpflegevorrichtung 10 ausgebildeten, externen Einheit, beispielsweise einer Servereinheit, insbesondere über eine Kommunikationseinheit der angetriebenen Bodenpflegevorrichtung 10 angesteuert wird (hier nicht weiter dargestellt).

Vorzugsweise wird in einem weiteren Verfahrensschritt 100, insbesondere einem Unterverfahrensschritt des weiteren Verfahrensschritts 42, der erfasste Bearbeitungsparameter, insbesondere die erfasste Bearbeitungsgeschwindigkeit, und/oder der erfasste Fortbewegungsparameter, insbesondere die erfasste Fortbewegungsgeschwindigkeit, mit in der Speichereinheit 20 der Steuer- und/oder Regeleinheit 16 hinterlegten Bearbeitungsparametern, insbesondere Bearbeitungsgeschwindigkeiten, insbesondere Bearbeitungsgeschwindigkeitsintervallen, und/oder Fortbewegungsparametern, insbesondere Fortbewegungsgeschwindigkeiten, verglichen.

Bevorzugt wird in zumindest einem weiteren Verfahrensschritt 44 die elektrische Vortriebsantriebseinheit 12 zu einer stufenweisen Regelung der Fortbewegungsgeschwindigkeit in Abhängigkeit von vorgegebenen, insbesondere in zumindest einer Speichereinheit 20 zumindest einer Steuer- und/oder Regeleinheit 16 der angetriebenen Bodenpflegevorrichtung 10 hinterlegten, Beschleunigungsdaten angesteuert. Alternativ oder zusätzlich ist denkbar, dass die Beschleunigungsdaten in einer Speichereinheit der externen Einheit hinterlegt sind und insbesondere von der externen Einheit und/oder von der Steuer- und/oder Regeleinheit 16, insbesondere über die Kommunikationseinheit der angetriebenen Bodenpflegevorrichtung 10, zu einer Ansteuerung der elektrischen Vortriebsantriebseinheit 12 genutzt werden. Der weitere Verfahrensschritt 44 ist insbesondere als ein Unterverfahrensschritt des weiteren Verfahrensschritts 42 ausgebildet.

Vorzugsweise wird in zumindest einem weiteren, insbesondere als Unterverfahrensschritt des weiteren Verfahrensschritts 44 ausgebildeten, Verfahrensschritt 102 in Abhängigkeit von einem erfassten Bearbeitungsparameter, insbesondere in Abhängigkeit von einer erfassten Bearbeitungsgeschwindigkeit, der kleiner/die geringer ist als ein/eine/ein in der Speichereinheit 20 hinterlegter/hinterlegte/hinterlegtes, einem erfassten Fortbewegungsparameter, insbesondere einer erfassten Fortbewegungsgeschwindigkeit, zugeordneter/zugeordnete/zugeordnetes Bearbeitungsparameter, insbesondere Bearbeitungsgeschwindigkeit, insbesondere Bearbeitungsgeschwindigkeitsintervall, die Fortbewegungsgeschwindigkeit reduziert. Vorzugsweise wird in zumindest einem weiteren, insbesondere als Unterverfahrensschritt des weiteren Verfahrensschritts 44 ausgebildeten, insbesondere als ein zu dem weiteren Verfahrensschritt 102 alternativen, Verfahrensschritt 104 in Abhängigkeit von einem erfassten Bearbeitungsparameter, insbesondere in Abhängigkeit von einer erfassten Bearbeitungsgeschwindigkeit, der größer/die höher ist als ein/eine/ein in der Speichereinheit 20 hinterlegter/hinterlegte/hinterlegtes, einem erfassten Fortbewegungsparameter, insbesondere einer erfassten Fortbewegungsgeschwindigkeit, zugeordneter/zugeordnete/zugeordnetes Bearbeitungsparameter, insbesondere Bearbeitungsgeschwindigkeit, insbesondere Bearbeitungsgeschwindigkeitsintervall, die Fortbewegungsgeschwindigkeit erhöht.

Bevorzugt wird in zumindest einem weiteren Verfahrensschritt 46 die elektrische Vortriebsantriebseinheit 12 zu einer Regelung der Fortbewegungsgeschwindigkeit in Abhängigkeit von einer Änderung des zumindest einen Bearbeitungsparameters, insbesondere der Bearbeitungsgeschwindigkeit, mit einer variablen Änderungsrate angesteuert. Insbesondere ist der weitere Verfahrensschritt 46 als ein Unterverfahrensschritt des weiteren Verfahrensschritts 42 ausgebildet. Vorzugsweise wird das Verfahren wiederholt durchgeführt, insbesondere solange die elektrische Vortriebsantriebseinheit 12 aktiviert ist.

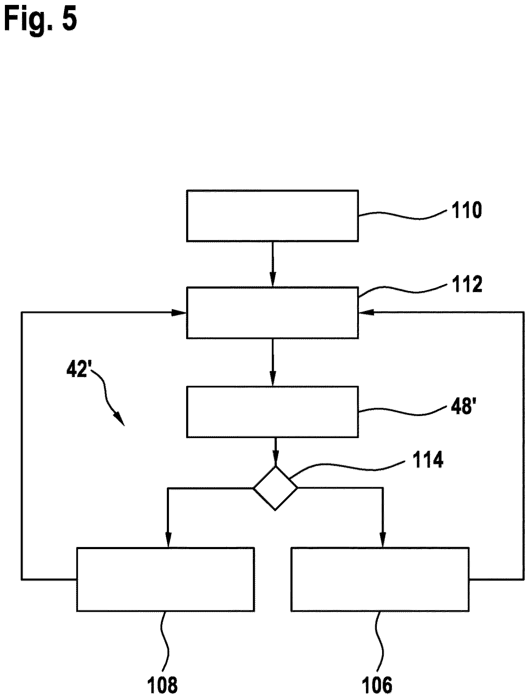

Figur 5 zeigt ein weiteres Ablaufdiagramm des Verfahrens zu einem Betrieb der angetriebenen Bodenpflegevorrichtung 10 aus Fig. 1 in einer schematischen Darstellung. Vorzugsweise wird ein in Figur 5 gezeigter Teil des Verfahrens zum Betrieb der angetriebenen Bodenpflegevorrichtung 10 alternativ zu einem in Figur 4 gezeigten Teil des Verfahrens zum Betrieb der angetriebenen Bodenpflegevorrichtung 10 durchgeführt, insbesondere in einem anderen Betriebsmodus der angetriebenen Bodenpflegevorrichtung 10 als der in Figur 4 gezeigte Teil des Verfahrens zum Betrieb der angetriebenen Bodenpflegevorrichtung 10. Alternativ ist vorstellbar, das der in Figur 5 gezeigte Teil des Verfahrens zumindest im Wesentlichen gleichzeitig mit dem in Figur 4 gezeigten Teil des Verfahrens durchgeführt wird, insbesondere in dem gleichen Betriebsmodus der angetriebenen Bodenpflegevorrichtung 10 wie der in Figur 4 gezeigte Teil.

Vorzugsweise wird in zumindest einem Verfahrensschritt 110 die elektrische Bearbeitungsantriebseinheit 14 aktiviert. Vorzugsweise werden in zumindest einem weiteren Verfahrensschritt 112 zumindest ein Bearbeitungsparameter, insbesondere eine Bearbeitungsgeschwindigkeit, und zumindest ein Fortbewegungsparameter, insbesondere eine Fortbewegungsgeschwindigkeit, erfasst.

Bevorzugt wird in zumindest einem weiteren Verfahrensschritt 48' der Mittelwert des zumindest einen Fortbewegungsparameters, insbesondere der Fortbewegungsgeschwindigkeit, in Abhängigkeit von zumindest drei, innerhalb von höchstens 50 Millisekunden erfassten Fortbewegungsparametern, insbesondere Fortbewegungsgeschwindigkeiten, ermittelt.

Bevorzugt wird in zumindest einem weiteren Verfahrensschritt 42 zumindest eine, insbesondere die vorgenannte, elektrische Bearbeitungsantriebseinheit 14 der angetriebenen Bodenpflegevorrichtung 10 zu einer stufenweisen Regelung einer Bearbeitungsgeschwindigkeit der angetriebenen Bodenpflegevorrichtung 10 in Abhängigkeit von zumindest einem von der Erfassungseinheit 18 erfassten Bearbeitungsparameter, insbesondere in Abhängigkeit von einem von der Erfassungseinheit 18 erfassten Lastparameter der elektrischen Bearbeitungsantriebseinheit 14, und in Abhängigkeit von zumindest einem von der Erfassungseinheit 18 erfassten Fortbewegungsparameter, insbesondere in Abhängigkeit von einer von der Erfassungseinheit 18 erfassten Fortbewegungsgeschwindigkeit, insbesondere in Abhängigkeit von einem Mittelwert einer Mehrzahl von Messungen des zumindest einen Fortbewegungsparameters, insbesondere der Fortbewegungsgeschwindigkeit, angesteuert. Bevorzugt wird die elektrische Bearbeitungsantriebseinheit 14 von der Steuer- und/oder Regeleinheit 16 zu einer stufenweisen Regelung der Bearbeitungsgeschwindigkeit angesteuert. Alternativ oder zusätzlich ist denkbar, dass die elektrische Bearbeitungsantriebseinheit 14 von der separat von der angetriebenen Bodenpflegevorrichtung 10 ausgebildeten, externen Einheit, beispielsweise der Servereinheit, insbesondere über die Kommunikationseinheit der angetriebenen Bodenpflegevorrichtung 10 angesteuert wird (hier nicht weiter dargestellt).

Vorzugsweise wird in einem weiteren Verfahrensschritt 114, insbesondere einem Unterverfahrensschritt des weiteren Verfahrensschritts 42', der erfasste Bearbeitungsparameter, insbesondere der erfasste Lastparameter der elektrischen Bearbeitungsantriebseinheit 14, und/oder der erfasste Fortbewegungsparameter, insbesondere die erfasste Fortbewegungsgeschwindigkeit, mit in der Speichereinheit 20 der Steuer- und/oder Regeleinheit 16 hinterlegten Bearbeitungsparametern, insbesondere Lastparametern der elektrischen Bearbeitungsantriebseinheit 14, und/oder Fortbewegungsparametern, insbesondere Fortbewegungsgeschwindigkeiten, verglichen.

Bevorzugt wird in zumindest einem weiteren Verfahrensschritt 106, insbesondere einem Unterverfahrensschritt des weiteren Verfahrensschritts 42', in Abhängigkeit von zumindest einem erfassten Fortbewegungsparameter, insbesondere von einer erfassten Fortbewegungsgeschwindigkeit, größer als ein Grenzfortbewegungsparameter, insbesondere als eine Grenzfortbewegungsgeschwindigkeit, und/oder in Abhängigkeit von zumindest einem erfassten Bearbeitungsparameter, insbesondere von zumindest einem erfassten Lastparameter der elektrischen Bearbeitungsantriebseinheit 14, größer als ein Grenzbearbeitungsparameter, insbesondere als ein Grenzlastparameter, die elektrische Bearbeitungsantriebseinheit 14 zu einer Regelung der Bearbeitungsgeschwindigkeit auf eine Maximalbearbeitungsgeschwindigkeit angesteuert.

Bevorzugt wird in zumindest einem weiteren, insbesondere als Unterverfahrensschritt des weiteren Verfahrensschritts 42' ausgebildeten, insbesondere als ein zu dem weiteren Verfahrensschritt 106 alternativen, Verfahrensschritt 108 in Abhängigkeit von zumindest einem erfassten Fortbewegungsparameter, insbesondere von einer erfassten Fortbewegungsgeschwindigkeit, kleiner als der Grenzfortbewegungsparameter, insbesondere als die Grenzfortbewegungsgeschwindigkeit, und in Abhängigkeit von zumindest einem erfassten Bearbeitungsparameter, insbesondere von zumindest einem erfassten Lastparameter der elektrischen Bearbeitungsantriebseinheit 14, kleiner als der Grenzbearbeitungsparameter, insbesondere als der Grenzlastparameter, die elektrische Bearbeitungsantriebseinheit 14 zu einer Regelung der Bearbeitungsgeschwindigkeit auf eine Leerlaufbearbeitungsgeschwindigkeit angesteuert. Vorzugsweise wird das Verfahren wiederholt durchgeführt, insbesondere solange die elektrische Bearbeitungsantriebseinheit 14 aktiviert ist.

Hinsichtlich weiterer Verfahrensschritte des Verfahrens zum Betrieb der angetriebenen Bodenpflegevorrichtung 10 darf auf die vorhergehende Beschreibung der angetriebenen Bodenpflegevorrichtung 10 verwiesen werden, da diese Beschreibung analog auch auf das Verfahren zu lesen ist und somit alle Merkmale hinsichtlich der angetriebenen Bodenpflegevorrichtung 10 auch in Bezug auf das Verfahren zum Betrieb der angetriebenen Bodenpflegevorrichtung 10 als offenbart gelten.

## Patentansprüche

1. Angetriebene Bodenpflegevorrichtung, insbesondere akkubetriebener Rasenmäher, mit zumindest einer elektrischen Vortriebsantriebseinheit (12), mit zumindest einer elektrischen Bearbeitungsantriebseinheit (14), mit zumindest einer Steuerund/oder Regeleinheit (16), die dazu eingerichtet ist, die elektrische Vortriebsantriebseinheit (12) zu einer Regelung einer Fortbewegungsgeschwindigkeit anzusteuern, und mit zumindest einer Erfassungseinheit (18), die zu einer Erfassung von zumindest einem Fortbewegungsparameter und von zumindest einem Bearbeitungsparameter, insbesondere von zumindest einem Lastparameter der elektrischen Vortriebsantriebseinheit (12) und/oder der elektrischen Bearbeitungsantriebseinheit (14), eingerichtet ist, wobei die Steuer- und/oder Regeleinheit (16) dazu eingerichtet ist, die elektrische Vortriebsantriebseinheit (12) zu einer stufenweisen Regelung der Fortbewegungsgeschwindigkeit in Abhängigkeit von zumindest einem von der Erfassungseinheit (18) erfassten Fortbewegungsparameter und in Abhängigkeit von zumindest einem von der Erfassungseinheit (18) erfassten Bearbeitungsparameter, insbesondere in Abhängigkeit von einem Mittelwert einer Mehrzahl von Messungen des zumindest einen Bearbeitungsparameters, anzusteuern, wobei die Steuer- und/oder Regeleinheit (16) dazu eingerichtet ist, die elektrische Vortriebsantriebseinheit (12) zu einer stufenweisen Regelung der Fortbewegungsgeschwindigkeit in Abhängigkeit von vorgegebenen, insbesondere in zumindest einer Speichereinheit (20) der Steuer- und/oder Regeleinheit (16) hinterlegten, Beschleunigungsdaten anzusteuern, **dadurch gekennzeichnet, dass** die Beschleunigungsdaten eine Mehrzahl von hystereseartigen Beschleunigungs- und/oder Bremskennlinien (22, 24, 26, 28, 30, 32, 34, 36, 38, 40) der elektrischen Vortriebsantriebseinheit (12) vorgeben, wobei jede der hystereseartigen Beschleunigungs- und/oder Bremskennlinien (22, 24, 26, 28, 30, 32, 34, 36, 38, 40) einem anderen Fortbewegungsparameter, insbesondere einer anderen Fortbewegungsgeschwindigkeit, zugeordnet ist.

2. Angetriebene Bodenpflegevorrichtung nach Anspruch 1, **dadurch gekennzeichnet, dass** die Beschleunigungsdaten, insbesondere die zumindest eine hystereseartige Beschleunigungs- und/oder Bremskennlinie (22, 24, 26, 28, 30, 32, 34, 36, 38, 40), eine Beschleunigung für einen Übergang von zumindest einem Fortbewegungsparameter, insbesondere von zumindest einer Fortbewegungsgeschwindigkeit, auf zumindest einen weiteren Fortbewegungsparameter, insbesondere auf zumindest eine weitere Fortbewegungsgeschwindigkeit, vorgeben/vorgibt, die einer inversen Beschleunigung für einen Übergang von dem zumindest einen weiteren Fortbewegungsparameter, insbesondere von der zumindest einen weiteren Fortbewegungsgeschwindigkeit, auf den zumindest einen Fortbewegungsparameter, insbesondere auf die zumindest eine Fortbewegungsgeschwindigkeit, entspricht.

3. Angetriebene Bodenpflegevorrichtung nach einem der vorhergehenden Ansprüche, **dadurch gekennzeichnet, dass** die Steuer- und/oder Regeleinheit (16) dazu eingerichtet ist, die elektrische Vortriebsantriebseinheit (12) zu einer Regelung der Fortbewegungsgeschwindigkeit in Abhängigkeit von einer Änderung des zumindest einen Bearbeitungsparameters, insbesondere der Bearbeitungsgeschwindigkeit, mit einer variablen Änderungsrate anzusteuern.

4. Angetriebene Bodenpflegevorrichtung nach einem der vorhergehenden Ansprüche, **dadurch gekennzeichnet, dass** die Steuer- und/oder Regeleinheit (16) dazu eingerichtet ist, den Mittelwert des zumindest einen Bearbeitungsparameters in Abhängigkeit von zumindest drei, innerhalb von höchstens 50 Millisekunden erfassten Bearbeitungsparametern und/oder den Mittelwert des zumindest einen Fortbewegungsparameters in Abhängigkeit von zumindest drei, innerhalb von höchstens 50 Millisekunden erfassten Fortbewegungsparametern zu ermitteln.

5. Angetriebene Bodenpflegevorrichtung nach einem der vorhergehenden Ansprüche, **dadurch gekennzeichnet, dass** die Steuer- und/oder Regeleinheit (16) dazu eingerichtet ist, in Abhängigkeit von zumindest einem erfassten Fortbewegungsparameter, insbesondere von einer erfassten Fortbewegungsgeschwindigkeit, größer als ein Grenzfortbewegungsparameter, insbesondere als eine Grenzfortbewegungsgeschwindigkeit, und/oder in Abhängigkeit von zumindest einem erfassten Bearbeitungsparameter, insbesondere von zumindest einem erfassten Lastparameter der elektrischen Bearbeitungsantriebseinheit (14), größer als ein Grenzbearbeitungsparameter, insbesondere als ein Grenzlastparameter, die elektrische Bearbeitungsantriebseinheit (14) zu einer Regelung der Bearbeitungsgeschwindigkeit auf eine Maximalbearbeitungsgeschwindigkeit anzusteuern.

6. Angetriebene Bodenpflegevorrichtung nach Anspruch 5, **dadurch gekennzeichnet, dass** die Steuer- und/oder Regeleinheit (16) dazu eingerichtet ist, in Abhängigkeit von zumindest einem erfassten Fortbewegungsparameter, insbesondere von einer erfassten Fortbewegungsgeschwindigkeit, kleiner als der Grenzfortbewegungsparameter, insbesondere als die Grenzfortbewegungsgeschwindigkeit, und in Abhängigkeit von zumindest einem erfassten Bearbeitungsparameter, insbesondere von zumindest einem erfassten Lastparameter der elektrischen Bearbeitungsantriebseinheit (14), kleiner als der Grenzbearbeitungsparameter, insbesondere als der Grenzlastparameter, die elektrische Bearbeitungsantriebseinheit (14) zu einer Regelung der Bearbeitungsgeschwindigkeit auf eine Leerlaufbearbeitungsgeschwindigkeit anzusteuern.

7. Verfahren zum Betrieb einer angetriebenen Bodenpflegevorrichtung, insbesondere einer angetriebenen Bodenpflegevorrichtung nach einem der vorhergehenden Ansprüche, wobei in zumindest einem Verfahrensschritt (42, 42') zumindest eine elektrische Vortriebsantriebseinheit (12) der angetriebenen Bodenpflegevorrichtung zu einer stufenweisen Regelung einer Fortbewegungsgeschwindigkeit der angetriebenen Bodenpflegevorrichtung in Abhängigkeit von zumindest einem von zumindest einer Erfassungseinheit (18) der angetriebenen Bodenpflegevorrichtung erfassten Fortbewegungsparameter und in Abhängigkeit von zumindest einem von der Erfassungseinheit (18) erfassten Bearbeitungsparameter, insbesondere in Abhängigkeit von einem Mittelwert einer Mehrzahl von Messungen des zumindest einen Bearbeitungsparameters, angesteuert wird, wobei in zumindest einem Verfahrensschritt (44) die elektrische Vortriebsantriebseinheit (12) zu einer stufenweisen Regelung der Fortbewegungsgeschwindigkeit in Abhängigkeit von vorgegebenen, insbesondere in zumindest einer Speichereinheit (20) zumindest einer Steuer- und/oder Regeleinheit (16) der angetriebenen Bodenpflegevorrichtung hinterlegten, Beschleunigungsdaten angesteuert wird, die eine Mehrzahl von hystereseartigen Beschleunigungs- und/oder Bremskennlinien (22, 24, 26, 28, 30, 32, 34, 36, 38, 40) der elektrischen Vortriebsantriebseinheit (12) vorgeben, wobei jede der hystereseartigen Beschleunigungs- und/oder Bremskennlinien (22, 24, 26, 28, 30, 32, 34, 36, 38, 40) einem anderen Fortbewegungsparameter, insbesondere einer anderen Fortbewegungsgeschwindigkeit, zugeordnet ist.

8. Verfahren nach Anspruch 7, **dadurch gekennzeichnet, dass** in zumindest einem Verfahrensschritt (46) die elektrische Vortriebsantriebseinheit (12) zu einer Regelung der Fortbewegungsgeschwindigkeit in Abhängigkeit von einer Änderung des zumindest einen Bearbeitungsparameters, insbesondere der Bearbeitungsgeschwindigkeit, mit einer variablen Änderungsrate angesteuert wird.

9. Verfahren nach einem der Ansprüche 7 oder 8, **dadurch gekennzeichnet, dass** in zumindest einem Verfahrensschritt (48, 48') der Mittelwert des zumindest einen Bearbeitungsparameters in Abhängigkeit von zumindest drei, innerhalb von höchstens 50 Millisekunden erfassten Bearbeitungsparametern und/oder der Mittelwert des zumindest einen Fortbewegungsparameters in Abhängigkeit von zumindest drei, innerhalb von höchstens 50 Millisekunden erfassten Fortbewegungsparametern ermittelt werden/wird.

10. Verfahren nach einem der Ansprüche 7 bis 9, **dadurch gekennzeichnet, dass** in zumindest einem Verfahrensschritt (106) in Abhängigkeit von zumindest einem erfassten Fortbewegungsparameter, insbesondere von einer erfassten Fortbewegungsgeschwindigkeit, größer als ein Grenzfortbewegungsparameter, insbesondere als eine Grenzfortbewegungsgeschwindigkeit, und/oder in Abhängigkeit von zumindest einem erfassten Bearbeitungsparameter, insbesondere von zumindest einem erfassten Lastparameter der elektrischen Bearbeitungsantriebseinheit (14), größer als ein Grenzbearbeitungsparameter, insbesondere als ein Grenzlastparameter, die elektrische Bearbeitungsantriebseinheit (14) zu einer Regelung der Bearbeitungsgeschwindigkeit auf eine Maximalbearbeitungsgeschwindigkeit angesteuert wird.

11. Verfahren nach Anspruch 10, **dadurch gekennzeichnet, dass** in zumindest einem Verfahrensschritt (108) in Abhängigkeit von zumindest einem erfassten Fortbewegungsparameter, insbesondere von einer erfassten Fortbewegungsgeschwindigkeit, kleiner als der Grenzfortbewegungsparameter, insbesondere als die Grenzfortbewegungsgeschwindigkeit, und in Abhängigkeit von zumindest einem erfassten Bearbeitungsparameter, insbesondere von zumindest einem erfassten Lastparameter der elektrischen Bearbeitungsantriebseinheit (14), kleiner als der Grenzbearbeitungsparameter, insbesondere als der Grenzlastparameter, die elektrische Bearbeitungsantriebseinheit (14) zu einer Regelung der Bearbeitungsgeschwindigkeit auf eine Leerlaufbearbeitungsgeschwindigkeit angesteuert wird.

## Claims

1. Driven ground maintenance apparatus, in particular battery-operated lawnmower, having at least one electrical propulsion drive unit (12), having at least one electrical cultivation drive unit (14), having at least one open-loop and/or closed-loop control unit (16) configured to actuate the electrical propulsion drive unit (12) to regulate a speed of movement, and having at least one measuring unit (18) configured to measure at least one movement parameter and at least one cultivation parameter, in particular at least one load parameter of the electrical propulsion drive unit (12) and/or the electrical cultivation drive unit (14), wherein the open-loop and/or closed-loop control unit (16) is configured to actuate the electrical propulsion drive unit (12) to gradually regulate the speed of movement on the basis of at least one movement parameter measured by the measuring unit (18) and on the basis of at least one cultivation parameter measured by the measuring unit (18), in particular on the basis of a mean value for a plurality of measurements of the at least one cultivation parameter, the open-loop and/or closed-loop control unit (16) being configured to actuate the electrical propulsion drive unit (12) to gradually regulate the speed of movement on the basis of predefined acceleration data that are in particular stored in at least one memory unit (20) of the open-loop and/or closed-loop control unit (16), **characterized in that** the acceleration data predefine a plurality of hysteresis-type acceleration and/or braking characteristic curves (22, 24, 26, 28, 30, 32, 34, 36, 38, 40) of the electrical propulsion drive unit (12), each of the hysteresis-type acceleration and/or braking characteristic curves (22, 24, 26, 28, 30, 32, 34, 36, 38, 40) being associated with a different movement parameter, in particular a different speed of movement.

2. Driven ground maintenance apparatus according to Claim 1, **characterized in that** the acceleration data, in particular the at least one hysteresis-type acceleration and/or braking characteristic curve (22, 24, 26, 28, 30, 32, 34, 36, 38, 40), predefine/s an acceleration for a transition from at least one movement parameter, in particular from at least one speed of movement, to at least one other movement parameter, in particular to at least one other speed of movement, which corresponds to an inverse acceleration for a transition from the at least one other movement parameter, in particular from the at least one other speed of movement, to the at least one movement parameter, in particular to the at least one speed of movement.

3. Driven ground maintenance apparatus according to either of the preceding claims, **characterized in that** the open-loop and/or closed-loop control unit (16) is configured to actuate the electrical propulsion drive unit (12) to regulate the speed of movement at a variable rate of change on the basis of a change in the at least one cultivation parameter, in particular the cultivation speed.

4. Driven ground maintenance apparatus according to one of the preceding claims, **characterized in that** the open-loop and/or closed-loop control unit (16) is configured to determine the mean value of the at least one cultivation parameter on the basis of at least three cultivation parameters measured within no more than 50 milliseconds and/or the mean value of the at least one movement parameter on the basis of at least three movement parameters measured within no more than 50 milliseconds.

5. Driven ground maintenance apparatus according to one of the preceding claims, **characterized in that** the open-loop and/or closed-loop control unit (16) is configured to take at least one measured movement parameter, in particular one measured speed of movement, greater than a limit movement parameter, in particular than a limit speed of movement, and/or to take at least one measured cultivation parameter, in particular at least one measured load parameter of the electrical cultivation drive unit (14), greater than a limit cultivation parameter, in particular than a limit load parameter, as a basis for actuating the electrical cultivation drive unit (14) to regulate the cultivation speed to a maximum cultivation speed.

6. Driven ground maintenance apparatus according to Claim 5, **characterized in that** the open-loop and/or closed-loop control unit (16) is configured to take at least one measured movement parameter, in particular one measured speed of movement, less than the limit movement parameter, in particular than the limit speed of movement, and to take at least one measured cultivation parameter, in particular at least one measured load parameter of the electrical cultivation drive unit (14), less than the limit cultivation parameter, in particular than the limit load parameter, as a basis for actuating the electrical cultivation drive unit (14) to regulate the cultivation speed to an idling cultivation speed.

7. Method for operating a driven ground maintenance apparatus, in particular a driven ground maintenance apparatus according to one of the preceding claims, wherein at least one method step (42, 42') comprises actuating at least one electrical propulsion drive unit (12) of the driven ground maintenance apparatus to gradually regulate a speed of movement of the driven ground maintenance apparatus on the basis of at least one movement parameter measured by at least one measuring unit (18) of the driven ground maintenance apparatus and on the basis of at least one cultivation parameter measured by the measuring unit (18), in particular on the basis of a mean value for a plurality of measurements of the at least one cultivation parameter, wherein at least one method step (44) comprises actuating the electrical propulsion drive unit (12) to gradually regulate the speed of movement on the basis of predefined acceleration data that are in particular stored in at least one memory unit (20) of at least one open-loop and/or closed-loop control unit (16) of the driven ground maintenance apparatus, which acceleration data predefine a plurality of hysteresis-type acceleration and/or braking characteristic curves (22, 24, 26, 28, 30, 32, 34, 36, 38, 40) of the electrical propulsion drive unit (12), each of the hysteresis-type acceleration and/or braking characteristic curves (22, 24, 26, 28, 30, 32, 34, 36, 38, 40) being associated with a different movement parameter, in particular a different speed of movement.

8. Method according to Claim 7, **characterized in that** at least one method step (46) comprises actuating the electrical propulsion drive unit (12) to regulate the speed of movement at a variable rate of change on the basis of a change in the at least one cultivation parameter, in particular the cultivation speed.

9. Method according to either of Claims 7 and 8, **characterized in that** at least one method step (48, 48') comprises determining the mean value of the at least one cultivation parameter on the basis of at least three cultivation parameters measured within no more than 50 milliseconds and/or the mean value of the at least one movement parameter on the basis of at least three movement parameters measured within no more than 50 milliseconds.

10. Method according to one of Claims 7 to 9, **characterized in that** at least one method step (106) comprises taking at least one measured movement parameter, in particular one measured speed of movement, greater than a limit movement parameter, in particular than a limit speed of movement, and/or taking at least one measured cultivation parameter, in particular at least one measured load parameter of the electrical cultivation drive unit (14), greater than a limit cultivation parameter, in particular than a limit load parameter, as a basis for actuating the electrical cultivation drive unit (14) to regulate the cultivation speed to a maximum cultivation speed.

11. Method according to Claim 10, **characterized in that** at least one method step (108) comprises taking at least one measured movement parameter, in particular one measured speed of movement, less than a limit movement parameter, in particular than a limit speed of movement, and taking at least one measured cultivation parameter, in particular at least one measured load parameter of the electrical cultivation drive unit (14), less than the limit cultivation parameter, in particular than the limit load parameter, as a basis for actuating the electrical cultivation drive unit (14) to regulate the cultivation speed to an idling cultivation speed.

## Revendications

1. Dispositif motorisé d'entretien d'un sol, en particulier tondeuse à gazon à batterie, avec au moins une unité électrique (12) d'entraînement de déplacement, avec au moins une unité électrique (14) d'entraînement de travail, avec au moins une unité (16) de commande et/ou de régulation qui est conçue pour commander l'unité électrique (12) d'entraînement de déplacement pour une régulation d'une vitesse de déplacement, et avec au moins une unité de détection (18) qui est conçue pour une détection d'au moins un paramètre de déplacement et d'au moins un paramètre de travail, en particulier d'au moins un paramètre de charge de l'unité électrique (12) d'entraînement de déplacement et/ou de l'unité électrique (14) d'entraînement de travail, l'unité (16) de commande et/ou de régulation étant conçue pour réguler par étapes la vitesse de déplacement de l'unité électrique (12) d'entraînement de déplacement en fonction d'au moins un paramètre d'avancement détecté par l'unité de détection (18) et en fonction d'au moins un paramètre de travail détecté par l'unité de détection (18), en particulier en fonction d'une valeur moyenne d'une pluralité de mesures dudit au moins un paramètre de travail, l'unité (16) de commande et/ou de régulation étant conçue pour commander l'unité électrique (12) d'entraînement de déplacement en vue d'une régulation par étapes de la vitesse de déplacement en fonction de données d'accélération prédéfinies, en particulier enregistrées dans au moins une unité mémoire (20) de l'unité (16) de commande et/ou de régulation, **caractérisé en ce que** les données d'accélération prédéfinissent une pluralité de courbes caractéristiques d'accélération et/ou de freinage de type hystérésis (22, 24, 26, 28, 30, 32, 34, 36, 38, 40) de l'unité électrique (12) d'entraînement de déplacement, chacune des courbes caractéristiques d'accélération et/ou de freinage de type hystérésis (22, 24, 26, 28, 30, 32, 34, 36, 38, 40) étant associée à un autre paramètre de déplacement, en particulier à une autre vitesse de déplacement.

2. Dispositif motorisé d'entretien d'un sol selon la revendication 1, **caractérisé en ce que** les données d'accélération, en particulier lesdites au moins une courbe caractéristique d'accélération et/ou de freinage de type hystérésis (22, 24, 26, 28, 30, 32, 34, 36, 38, 40), définissent une accélération pour une transition d'au moins un paramètre de déplacement, en particulier d'au moins une vitesse de déplacement, vers au moins un autre paramètre de déplacement, en particulier à au moins une autre vitesse de déplacement, qui correspond à une accélération inverse pour une transition dudit au moins un autre paramètre de déplacement, en particulier de ladite au moins une autre vitesse de déplacement, vers ledit au moins un paramètre de déplacement, en particulier vers ladite au moins une vitesse de déplacement.

3. Dispositif motorisé d'entretien d'un sol selon l'une des revendications précédentes, **caractérisé en ce que** l'unité (16) de commande et/ou de régulation est agencée de façon à commander l'unité électrique (12) d'entraînement de déplacement pour une régulation de la vitesse de déplacement en fonction d'une modification dudit au moins un paramètre de travail, en particulier de la vitesse de travail, avec un taux de variation variable.

4. Dispositif motorisé d'entretien d'un sol selon l'une des revendications précédentes, **caractérisé en ce que** l'unité (16) de commande et/ou de régulation est agencée pour déterminer la valeur moyenne dudit au moins un paramètre de travail en fonction d'au moins trois paramètres de travail détectés en 50 millisecondes maximum et/ou la valeur moyenne dudit au moins un paramètre de déplacement en fonction d'au moins trois paramètres de déplacement détectés en 50 millisecondes maximum.

5. Dispositif motorisé d'entretien d'un sol selon l'une des revendications précédentes, **caractérisé en ce que** l'unité (16) de commande et/ou de régulation est conçue pour déterminer, en fonction d'au moins un paramètre de déplacement détecté, en particulier d'une vitesse de déplacement détectée, un paramètre de déplacement limite supérieur à une vitesse de déplacement limite, en particulier une vitesse de déplacement limite, et/ou en fonction d'au moins un paramètre de travail détecté, en particulier d'au moins un paramètre de charge détecté de l'unité électrique (14) d'entraînement de travail, supérieur à un paramètre de travail limite, en particulier à un paramètre de charge limite, l'unité électrique (14) d'entraînement de travail étant commandée pour une régulation de la vitesse de travail à une vitesse de travail maximale.

6. Dispositif motorisé d'entretien d'un sol selon la revendication 5, **caractérisé en ce que** l'unité (16) de commande et/ou de régulation est conçue pour, en fonction du fait qu'au moins un paramètre de déplacement détecté, en particulier une vitesse de déplacement détectée, est inférieur au paramètre de déplacement limite, en particulier à la vitesse de déplacement limite, et en fonction du fait qu'au moins un paramètre de travail détecté, en particulier au moins un paramètre de charge détecté de l'unité électrique (14) d'entraînement de travail, est inférieur au paramètre de travail limite, en particulier au paramètre de charge limite, commander l'unité électrique (14) d'entraînement de travail pour une régulation de la vitesse de travail à une vitesse de travail à vide.

7. Procédé de fonctionnement d'un dispositif motorisé d'entretien d'un sol, en particulier d'un dispositif motorisé d'entretien d'un sol selon l'une des revendications précédentes, dans lequel, dans au moins une étape de procédé (42, 42'), au moins une unité électrique (12) d'entraînement de déplacement du dispositif motorisé d'entretien d'un sol est commandée pour une régulation par paliers d'une vitesse de déplacement du dispositif motorisé d'entretien d'un sol en fonction d'au moins un paramètre de déplacement détecté par au moins une unité de détection (18) du dispositif motorisé d'entretien d'un sol et en fonction d'au moins un paramètre de travail détecté par l'unité de détection (18), en particulier en fonction d'une valeur moyenne d'une pluralité de mesures dudit au moins un paramètre de travail, l'unité électrique (12) d'entraînement de déplacement étant, dans au moins une étape de procédé (44), commandée pour une régulation par paliers de la vitesse de déplacement en fonction de données d'accélération prédéfinies, en particulier stockées dans au moins une unité mémoire (20) d'au moins une unité (16) de commande et/ou de régulation du dispositif motorisé d'entretien d'un sol, qui définissent une pluralité de courbes caractéristiques d'accélération et/ou de freinage de type hystérésis (22, 24, 26, 28, 30, 32, 34, 36, 38, 40) de l'unité électrique (12) d'entraînement de déplacement, chacune des courbes caractéristiques d'accélération et/ou de freinage de type hystérésis (22, 24, 26, 28, 30, 32, 34, 36, 38, 40) étant associée à un paramètre de déplacement différent, en particulier à une vitesse de déplacement différente.

8. Procédé selon la revendication 7, **caractérisé en ce que**, dans au moins une étape de procédé (46), l'unité électrique (12) d'entraînement de déplacement est commandée pour une régulation de la vitesse de déplacement en fonction d'une variation d'au moins un paramètre de travail, en particulier de la vitesse de travail, avec un taux de variation variable.

9. Procédé selon l'une des revendications 7 ou 8, **caractérisé en ce que**, dans au moins une étape de procédé (48, 48'), la valeur moyenne dudit au moins un paramètre de travail est déterminée ou apte à être déterminée en fonction d'au moins trois paramètres de travail détectés en l'espace de 50 millisecondes au maximum et/ou la valeur moyenne dudit au moins un paramètre de déplacement est/est déterminée en fonction d'au moins trois paramètres de déplacement détectés en l'espace de 50 millisecondes au maximum.

10. Procédé selon l'une des revendications 7 à 9, **caractérisé en ce que**, dans au moins une étape de procédé (106), en fonction du fait qu"au moins un paramètre de déplacement détecté, en particulier une vitesse de déplacement détectée, est supérieur à un paramètre de déplacement limite, en particulier à une vitesse de déplacement limite, et/ou en fonction du fait qu"au moins un paramètre de travail détecté, en particulier d'au moins un paramètre de charge détecté de l'unité électrique (14) d'entraînement de travail, est supérieur à un paramètre de travail limite, en particulier supérieur à un paramètre de charge limite, l'unité électrique (14) d'entraînement de travail est commandée pour une régulation de la vitesse de travail à une vitesse de travail maximale.

11. Procédé selon la revendication 10, **caractérisé en ce que**, dans au moins une étape de procédé (108), en fonction du fait qu'au moins un paramètre de déplacement détecté, en particulier une vitesse de déplacement détectée, est inférieur au paramètre de déplacement limite, en particulier inférieur à la vitesse de déplacement limite, et en fonction du fait qu'au moins un paramètre de travail détecté, en particulier au moins un paramètre de charge détecté de l'unité électrique (14) d'entraînement de travail, est inférieur au paramètre de travail limite, en particulier inférieur au paramètre de charge limite, l'unité électrique (14) d'entraînement de travail est commandée pour une régulation de la vitesse de travail à une vitesse de travail à vide.
